# EUROPEAN PATENT SPECIFICATION

(11) **EP 1 586 479 B1**
(45) Date of publication and mention of the grant of the patent: **23.07.2008**
(21) Application number: 05008220.5
(22) Date of filing: 14.04.2005
(51) Int. Cl.: B60K 17/356, B60K 17/10

(54) **Four-wheel drive vehicle**
Fahrzeug mit Allradantrieb
Véhicule à quatre roues motrices

(30) Priority: 15.04.2004 JP 2004120847
(43) Date of publication of application: 19.10.2005
(73) Proprietor: KANZAKI KOKYUKOKI MFG. CO., LTD., Amagasaki-shi, Hyogo (JP)
(72) Inventor: Hasegawa, Toshiuki, Amagasaki-shi Hyogo (JP); Iwaki, Koji, Amagasaki-shi Hyogo (JP); Ishii, Norihiro, Amagasaki-shi Hyogo (JP); Nozaki, Takeaki, Amagasaki-shi Hyogo (JP); Shimizu, Hiroaki, Amagasaki-shi Hyogo (JP)
(74) Representative: Jostarndt, Hans-Dieter

(56) References cited:
- EP-A- 0 893 296
- EP-A- 1 410 938
- CH-A- 393 935
- FR-A- 2 101 851
- GB-A- 1 071 661
- GB-A- 1 165 217
- GB-A- 1 354 560
- GB-A- 2 119 905
- US-A1- 2001 004 031

## Description

### Field of the Invention

The present invention relates to a four-wheel drive vehicle especially a utility vehicle having a cargo deck, whose prime mover is disposed between front wheels and rear wheels, having a hydraulic drive system used for transmitting power to front wheels.

### Related Art

Conventionally, there is a well-known four-wheel drive utility vehicle having a cargo deck, in which a first transaxle supporting and driving first axles (for example, for rear wheels) and a second transaxle supporting and driving second axles (for example, for front wheels) are disposed behind and before of the vehicle, respectively and a prime mover is disposed between the transaxles. An input part of the first transaxle is provided on one of left and right sides thereof, and is drivingly connected to the prime mover through a CVT (belt type continuously variable transmission). A power take-off part (PTO part) is provided on the other side of the first transaxle opposite to the input part, and is drivingly connected to an input part of the second transaxle through a mechanical drive train, which includes a bevel gear, a propeller shaft and universal joints. For example, such a vehicle is disclosed in the U.S. Application Publication No. 2001/0004031 A1.

However, in the above-mentioned conventional vehicle, the PTO part must be connected to the first transaxle and laterally elongated so as to prevent the mechanical drive train, therefrom, to the input part of the second transaxle, from interfering with the prime mover. Such an arrangement of the mechanical drive train, including the propeller shaft and the universal joints, is complicated in order to be interposed between the laterally eccentrically disposed PTO part and the input part of the second transaxle, which is usually disposed at the lateral center of the vehicle without interference with the prime mover. Further, minimization of the vehicle is difficult because of the space needed for arranging the mechanical drive train for transmitting power from the PTO part to the input part of the second transaxle. A further problem of the above-described utility vehicle is that the CVT interposed between the engine and the rear transaxle has a short life because it is exposed. Accordingly, an alternative stepless transmission is needed,

Furthermore, European Patent Application No. 0 893 296 A2 discloses a driving system for a working vehicle with front and rear wheels. A first hydraulic pump driven by power of an engine and a first hydraulic motor are fluidly connected so as to construct a closed fluid circuit. The hydraulic motor is drivingly connected with a sub-transmission of the vehicle. The output power of said sub-transmission is given to main-driving wheels and is also given to a second hydraulic pump fluidly connected with a second hydraulic motor for driving sub-driving wheels. Second hydraulic pump or second hydraulic motor has variable displacement, so that second hydraulic motor is drivingly accelerated in proportion to the degree of turning operation of a steering operating tool.

### Summary Of The Invention

An object of the present invention is to provide a compact and economic four-wheel drive vehicle, having front and rear transaxles disposed before and behind a prime mover.

According to the invention, this objective is achieved by the features of claim 1. Advantageous refinements of the invention can be gleaned from the subordinate claims 2-13.

To achieve the object, a four-wheel drive vehicle comprises a first transaxle driving a first axle and a second transaxle driving a second axle disposed before and behind a prime mover; a hydraulic motor for driving the second axle, provided in the second transaxle; a speed change transmission mechanism for driving the first axle, provided in the first transaxle, having a function of switching rotation direction, and drivingly connected to the prime mover; and a hydraulic pump, provided in the first transaxle, for supplying pressurized oil to the hydraulic motor of the second transaxle.

Accordingly, by constructing a flexible oil passage, such as piping, between the hydraulic pump provided in the first transaxle and the hydraulic motor provided in the second transaxle, the first and second transaxles can be drivingly connected with each other, whereby the oil passage can be prevented from interfering with the prime mover interposed between the transaxles,

Preferably, in a first aspect of the first transaxle of the four-wheel drive vehicle, the hydraulic pump is attached to a housing of the first transaxle, and a transmission shaft provided in the housing is used as a pump shaft of the hydraulic pump.

Accordingly, the hydraulic pump and the housing can be handled together as one unit.

Furthermore, preferably, the transmission shaft is driven by an output shaft of the speed change transmission mechanism of the first transaxle.

Accordingly, the hydraulic pump provided in the first transaxle is driven, by rotational force, after it is changed in speed by the speed changing transmission mechanism, so as to supply pressurized oil to the hydraulic motor provided in the second transaxle, thereby reducing or omitting a deceleration mechanism for synchronizing the second shaft with the first shaft in the second transaxle. When the speed change transmission mechanism has a function of switching drive direction of the first axle, rotation direction of the pump shaft is switched corresponding to the switching, thereby requiring no other mechanism for switching drive direction of the second axle in the second transaxle. Accordingly, this construction is suitable to synchronize the second axle with the first axle whose rotational speed and direction is changed by operation of the speed change transmission mechanism of the first transaxle.

Preferably, in a second aspect of the first transaxle of the four-wheel drive vehicle, the speed change transmission mechanism of the first transaxle comprises: a first speed change transmission mechanism provided out of the housing of the first transaxle; and a second speed change transmission mechanism provided within the housing. The first speed change transmission mechanism is drivingly disposed on the upstream of the second speed change transmission.

Accordingly, the variation of speed change pattern can be increased, and the housing can be miniaturized.

Furthermore, preferably, the first speed change transmission mechanism is a CVT, the second speed change transmission mechanism has the function of switching rotation direction, and an output shaft of the second speed change transmission mechanism serves as a pump shaft of the hydraulic pump.

Accordingly, the CVT serving as the first speed change transmission mechanism has stepless speed change effect. With regard to the hydraulic motor of the second transaxle, by making the output shaft of the second speed change transmission mechanism having the function of switching rotation direction serve as the pump shaft of the hydraulic pump, the switching of forward/rearward rotation of the second axis can correspond to the switching of forward/rearward rotation of the first axis without providing any special function in the second transaxle.

Preferably, in a third aspect of the first transaxle of the four-wheel drive vehicle, the speed change transmission mechanism of the first transaxle comprises a hydrostatic transmission (HST) constructed by combining the hydraulic pump with the hydraulic motor for driving the first axle, and the hydraulic pump of the HST also serves as a hydraulic pump for supplying pressurized oil to the hydraulic motor of the second transaxle.

Accordingly, the problem of the short durability of the above-mentioned CVT can be prevented so as to provide a four-wheel drive vehicle requiring no maintenance for a long term.

With regard to the third aspect of the first transaxle, preferably, the hydraulic pump is variable in capacity, and the function of switching rotation direction of the speed change transmission mechanism is produced by changing a discharge direction of the hydraulic pump.

Accordingly, the function of switching rotation direction can be obtained with the variable capacity type hydraulic pump.

Preferably, an output shaft of the prime mover serves as a pump shaft of the hydraulic pump.

Accordingly, mechanical (such as gear clutch type) or another rotation direction switching means does not have to be disposed in the housing of the first transaxle, whereby the housing can be miniaturized.

Preferably, the speed change transmission mechanism comprises the HST provided out of the housing of the first transaxle and a multi-speed stepped type second speed change transmission mechanism provided within the housing, on the downstream of the HST, and a motor shaft of the hydraulic motor for driving the first axle serves as an input shaft of the second speed change transmission mechanism.

Due to the HST disposed out of the housing for supporting the first axle, and due to the multi-speed stepped second speed change transmission mechanism disposed in the housing on the downstream of the HST, the hydraulic pump of the HST obtains the above-mentioned function of switching rotation direction, thereby requiring no other rotation direction switching mean in the second speed change transmission mechanism. Therefore, the housing can be miniaturized, or a space in the housing can be enlarged.

Preferably, the hydraulic motor is variable in capacity, and housed in the housing of the first transaxle supporting the first axle.

Accordingly, the hydraulic motor serves as the second speed change transmission mechanism. In other words, the variable capacity type hydraulic motor is disposed in the housing instead of the mechanical second speed change transmission mechanism, thereby reducing members constituting the HST disposed out of the housing, and miniaturizing the whole first transaxle.

Preferably, in a first aspect of the second transaxle of the four-wheel drive vehicle, a pair of left and right axles serve as the second axles, and a differential mechanism is drivingly interposed between the hydraulic motor and the pair of left and right second axles.

Accordingly, the differential rotation of the left and right second axles requires the only one hydraulic motor, thereby reducing the second transaxle in size and cost.

Preferably, in a second aspect of the second transaxle of the four-wheel drive vehicle, a pair of left and right axles serve as the second axles, and a pair of hydraulic motors serve as the hydraulic motors for driving the respective left and right second axles.

The pair of hydraulic motors replace a mechanical differential, thereby increasing variation of layout in the vehicle. Hydraulic motors with small capacity can be used as the hydraulic motors of the second transaxle. Furthermore, rotation speed of the motors can be set comparatively low, thereby providing a low-noise vehicle.

Furthermore, preferably, motor shafts of the hydraulic motors are mechanically connected with each other through a differential limit mechanism.

Accordingly, for example, even if a wheel provided on one of the second axles slips into a ditch, driving force of the other second axle can be maintained certainly,

Alternatively, the hydraulic motors are connected in parallel to the hydraulic pump of the first transaxle so as to permit differential rotation of the second axles, and the parallel connection of the hydraulic motors can be turned into series connection.

Accordingly, the second axles can obtain differential lock effect. The effect can be obtained by simply switching a hydraulic circuit, instead of a mechanical differential limit mechanism.

Preferably, in a third aspect of the second transaxle of the four-wheel drive vehicle, a clutch is interposed between the hydraulic motor and the second axle of the second transaxle so as to prevent power transmission from the second axle to the hydraulic motor and permit power transmission from the hydraulic motor to the second axle.

Especially, in the case that the second speed change transmission mechanism of the first transaxle to be combined with the CVT, for instance, is a gear mechanism, the hydraulic pump for driving the hydraulic motor of the second transaxle must be disposed at the output side of the gear type second speed change transmission mechanism. It is satisfactory if a rotation speed of a traveling wheel on the second axle caused by friction against the ground surface is balanced with a rotation speed thereof caused by driving of the hydraulic motor. However, for example, for a while after the engine starts, the rotation speed of the hydraulic pump is still low. Due to the characteristic of the slowly rotating hydraulic motor in volume efficiency, the hydraulic motor receiving the small amount of pressurized oil has a rotation speed lower than a value suitable to the rotation speed of the second axle caused by the friction against the ground surface. Accordingly, the hydraulic motor is rotated by the second axle so that the hydraulic motor drives the hydraulic pump reversely. However, the clutch prevents power from the second axle from being transmitted to the hydraulic motor when the rotation speed of the second axle becomes lower than the rotation speed of the first axle.

Preferably, the four-wheel drive vehicle is a utility vehicle having a cargo deck, and the first transaxle is disposed below the cargo deck. The above-mentioned hydraulic connection of the hydraulic pump in the first transaxle to the hydraulic motor in the second transaxle can be vertically minimized in structure, and can be disposed below the cargo deck so as to expand the capacity of the cargo deck thereabove,

These, further and other objects, features and advantages will appear more fully from the following description with reference to the accompanying drawings.

### Brief Description Of The Drawings

Fig. 1 is a schematic side view of a four-wheel drive vehicle equipped with a first embodiment of a rear transaxle 8 and a first embodiment of a front transaxle 13 according to the present invention.
Fig. 2 is a skeleton diagram of a rear transaxle 8.
Fig. 3 is a skeleton diagram of the first embodiment of the rear transaxle 8.
Fig. 4 is a skeleton diagram of the second embodiment of the rear transaxle 8.
Fig. 5 is a skeleton diagram of the first embodiment of the front transaxle 13.
Fig. 6 is a skeleton diagram of a second embodiment of the front transaxle 13.
Fig. 7 is a skeleton diagram of a third embodiment of the front transaxle 13.
Fig. 8 is a skeleton diagram of a fourth embodiment of the front transaxle 13.
Fig. 9 is a skeleton diagram of a fifth embodiment of the front transaxle 13.
Fig. 10 is a skeleton diagram of a sixth embodiment of the front transaxle 13.
Fig. 11 is a skeleton diagram of a seventh embodiment of the front transaxle 13.
Fig. 12 is a constructional schematic diagram of a basic engine governor.
Fig. 13 is a constructional schematic diagram of an engine governor using forward and rearward traveling pedals 4F and 4R, when an HST serves as a main speed change transmission mechanism of the rear transaxle 8.
Fig. 14 is a diagram of a hydraulic circuit of a control mechanism for a movable swash plate 40b when the HST serves as the main speed change transmission mechanism of the rear transaxle 8.
Fig. 15 is a constructional schematic diagram of the engine governor and a load control governor for the HST according to the detection of oil pressure of the HST when the HST serves as the main speed change transmission mechanism of the rear transaxle 8.

### Detailed Description Of The Invention

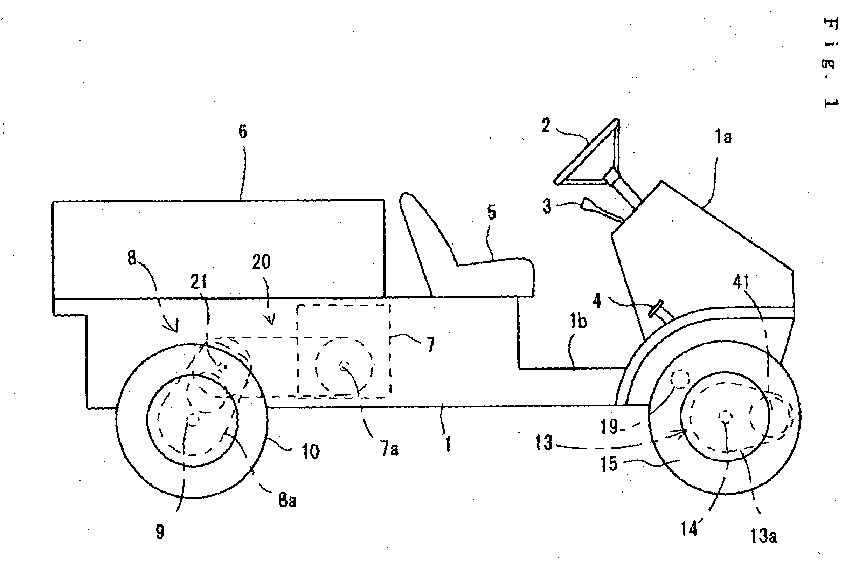

Explanation will be given of a schematic construction of a four-wheel drive utility vehicle having a cargo deck as an example of a four-wheel drive vehicle according to the present invention with reference to Figs. 1, 2 and 5.

The four-wheel drive utility vehicle has a vehicle body frame 1, on which a platform 1b is laid, and a front cover 1a is mounted before the platform 1b. A steering wheel 2 and a speed change lever (forward/rearward traveling switch lever) 3 are projected from the upper portion of the front cover 1a. The steering wheel 2 is provided for steering later-discussed front wheels 15, and the speed change lever 3 is provided for a sub speed change transmission mechanism and a forward/rearward traveling switch mechanism in a later-discussed rear transaxle housing 8a. An accelerator pedal 4 is provided at one of left and right sides (right side) of a lower portion of the front cover 1a, and a brake pedal (not shown) is provided at the other side of the lower portion of the front cover 1a. The vehicle body frame 1 has a higher portion behind the platform 1b. On the higher portion of the vehicle body frame 1, an operator's seat 5 is provided at the upper front end portion thereof, and a cargo deck 6 is provided behind the seat 5.

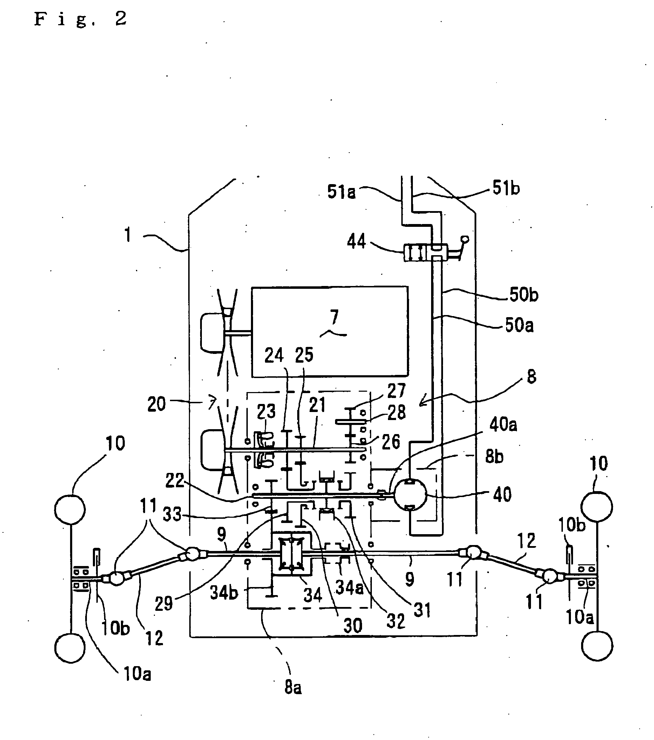

The vehicle body frame 1 supports an engine (prime mover) 7 at its front portion and the rear transaxle housing 8a at its rear portion under the cargo deck 6. A pair of left and right rear axles 9 is supported by the rear transaxle housing 8a, and drivingly connected to rear wheels 10 through universal joints 11 and propeller shafts 12 shown in Fig. 2. Suspensions (not shown), such as coil springs or air cylinders, are extended from the vehicle body frame 1 and connected to the respective rear wheels 10, whereby the rear transaxle housing 8a is supported so as to be vertically movable relative to the rear wheels 10.

A differential gear mechanism 34 (see Fig. 2), differentially connecting left and right rear axles with each other, is housed in the rear transaxle housing 8a. The differential gear mechanism 34 is drivingly connected to the engine 7 through a later-discussed stepless transmission mechanism, such as a CVT or an HST, disposed out of the rear transaxle housing 8a, thereby constructing a rear transaxle (first transaxle) 8.

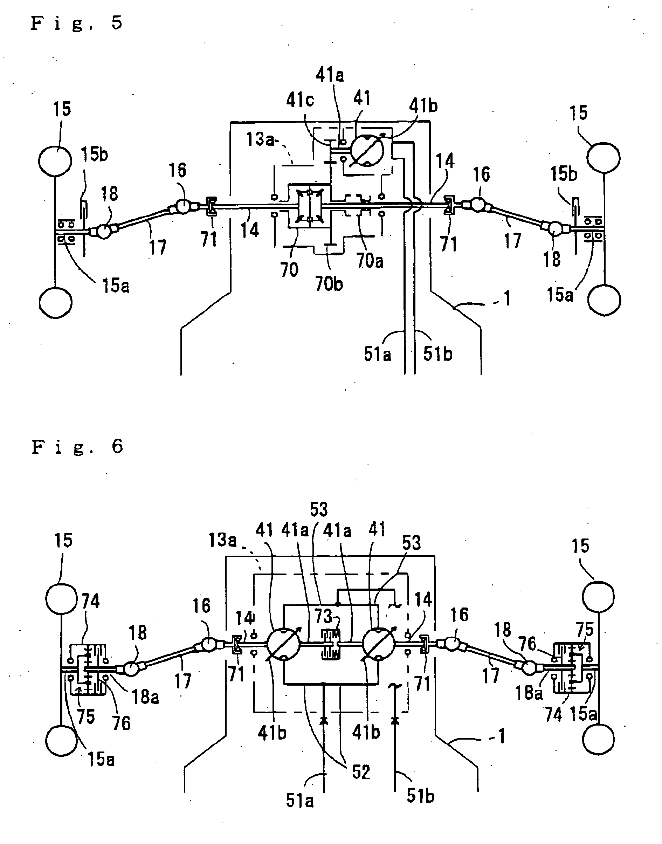

A front axle housing 13a of a front transaxle (second transaxle) 13 is supported by the vehicle body frame I under the front cover 1a. A pair of left and right front axles 14 are supported by the front axle housing 13a, and drivingly connected to the respective left and right front wheels 15 through universal joints 16, 18 and propeller shafts 17 shown in Fig. 5. Suspensions (not shown), such as coil springs or air cylinders, are extended from the vehicle body frame 1 and connected to the respective front wheels 15, whereby the front axle housing 13a is supported so as to be vertically movable relative to the front wheels 15.

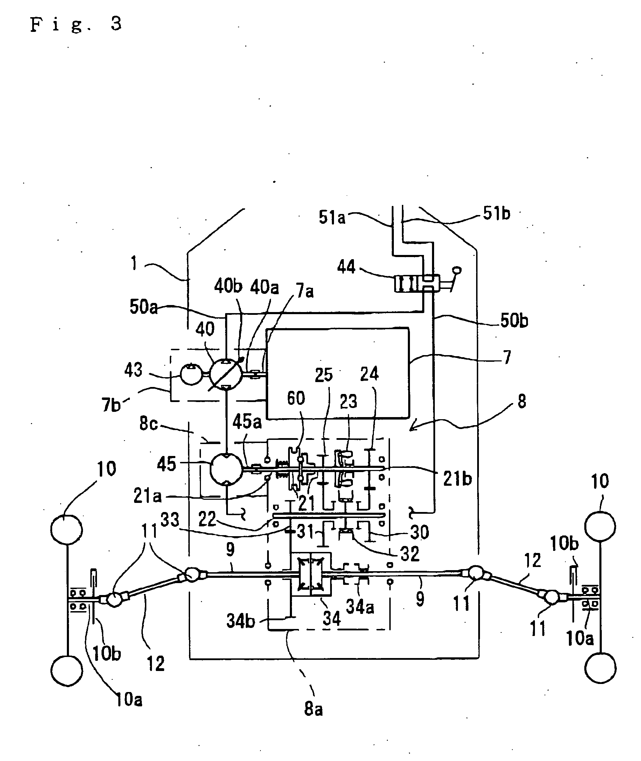

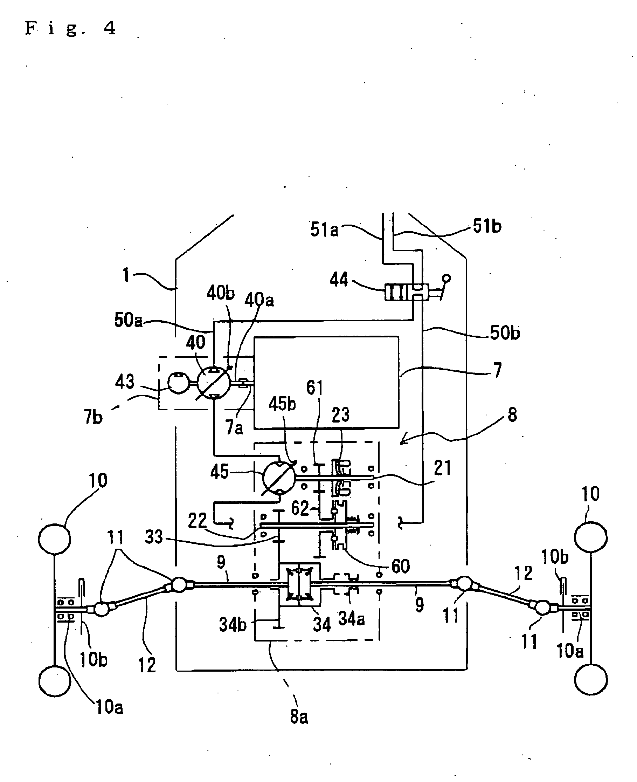

As discussed later, Figs. 3 and 4 show first and second embodiments of the rear transaxle 8 and a drive linkage of the rear transaxle 9 connected to the engine 7, and Figs. 5 to 9 show first to fifth embodiments of the front transaxle 13. The four-wheel drive utility vehicle shown in Fig. 1 adopts the rear transaxle 8 and drive linkage thereof to the engine 7 of Fig. 2 and the front transaxle 13 of the first embodiment shown in Fig. 5. Namely, as shown in Fig. 2, on one of left and right sides of the engine 7 and the rear transaxle 8, a CVT 20 serving as a main speed change transmission mechanism is disposed so as to drivingly connect an output shaft 7a of the engine 7 to an input shaft 21 of a sub speed change transmission mechanism of the rear transaxle 8. A hydraulic pump 40 is attached to the other right or left side of the rear transaxle 8. On the other hand, in the front transaxle 13, a differential gear mechanism 70 (omitted in Fig. 1) is interposed between the front axles 14, and a hydraulic motor 41 supplied with pressurized-oil from the hydraulic pump 40 is disposed on the upstream of the differential gear mechanism 70, as shown in Fig. 5. The front wheels 15 are steerably supported, and as shown in Fig. 1, a power steering cylinder 19 is provided between the front wheels 15, and a piston of the power steering cylinder 19 is moved by the operation of the steering wheel 2, thereby steering the front wheels 15.

Explanation will be given on the rear transaxle 8 and the drive linkage thereof connected to the engine 7 shown in Fig. 2. The input shaft 21 is extended laterally, and pivotally supported in the rear transaxle housing 8a. On the input shaft 21 within the rear transaxle housing 8a, a rotation sensor (governor weight) 23 is provided, sub speed change gears of high and low two stages, that is, a high speed drive gear 24 and a low speed drive gear 25 are fixed on beside the rotation sensor 23, and a rearward traveling drive gear 26 is fixed beside the sub speed change gears.

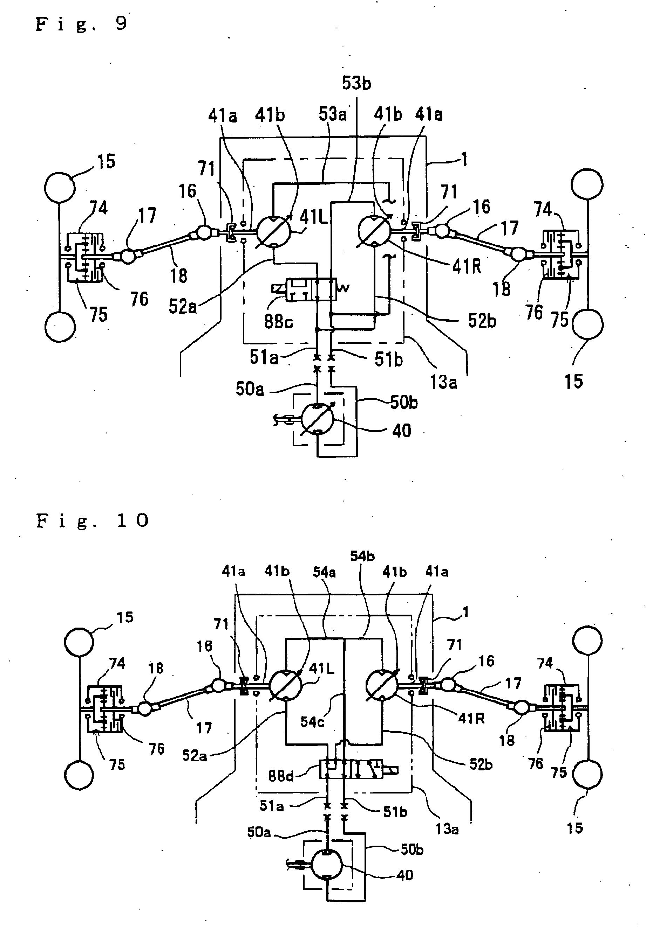

The rotation sensor 23 on the input shaft 21 is interlocked with a throttle of the engine 7 so as to construct a centrifugal control type engine governor, and the opening degree of the throttle is determined corresponding to the change of opening degree following the rotation of the input shaft 21. The throttle is also interlocked with the accelerator pedal 4 and the opening degree of the throttle is set by depressing the accelerator pedal 4. When the actual rotation speed of the input shaft 21 is lower than the rotation speed corresponding to the set speed, the rotation sensor 23 is closed to some degree, and the governor detects the closing of the rotation sensor 23, and increases the opening degree of the throttle so as to keep the traveling speed of the vehicle. In addition, the CVT 20 steplessly reduces its reduction ratio corresponding to the increase of the engine rotation speed. Explanation will be given later of the construction of the engine governor according to Fig. 10.

Furthermore, the CVT 20 typically has a driven pulley including a torque cam mechanism (not shown) for controlling the load. Accordingly, when load on the traveling wheels against the ground surface is detected, the reduction ratio of the CVT 20 is increased so as to reduce the burden on the engine.

In the rear transaxle housing 8a, below the input shaft 21, a high speed clutch gear 29, a low speed clutch gear 30 and a rearward traveling clutch gear 31 are freely rotatably fitted on an output shaft 22 in parallel to the input shaft 21. The high speed clutch gear 29 always engages with the high speed drive gear 24, and the low speed clutch gear 30 always engages with the low speed drive gear 25. An idler gear shaft 28 is pivotally supported in the rear transaxle housing 8a in parallel to the input shaft 21 and the output shaft 22, and an idler gear 27 provided on the idler gear shaft 28 engages with the rearward traveling drive gear 26 and the rearward traveling clutch gear 31,

Furthermore, a clutch slider 32 is axially slidably and not-relatively rotatably provided on the output shaft 22 so as to slide to selectively engage with one of the high speed clutch gear 29, the low speed clutch gear 30 and the rearward traveling clutch gear 31. The clutch slider 32 may be disposed to engage with none of the gears 29, 30 and 31 so as to cut off the transmission of rotation power of the input shaft 21 to the output shaft 22. The clutch slider 32 is operatively interlocked with the speed change lever 3.

A pinion 33 is fixed on the output shaft 22 and engages with a bull gear 34b of the differential gear mechanism 34. The differential gear mechanism 34 is disposed between the left and right axles 9 and differentially connects the axles 9 with each other. Because the pinion 33 on the output shaft 22 is shifted laterally, the bull gear 34b is freely rotatably fitted on one of the axles 9 on the same lateral side. Alternatively, the bull gear 34b may be disposed on mutually facing inner ends of the axles 9, if the pinion 33 is disposed suitably to such a bull gear 34b. A differential lock member 34a is provided on the other axle 9, and is not-relatively rotatably engaged to a differential casing of the' differential gear mechanism 34 timely so as to not-differentially connect the axles 9 with each other.

If each axle supported by a housing is extended to the center of a drive wheel, a wet type multi-disk brake is typically provided on the axle within the housing However. the rear transaxle housing 8a is supported by the suspensions so as to be vertically movable relative to the rear wheels 10, as mentioned above, thereby being unsuitable to house the brakes.

Therefore, a dry type single-disk brake 10b is attached to a center shaft of each rear wheel 10.

Both of the brakes 10b are operatively interlocked with the above-mentioned brake pedal (not shown) through a hydraulic or mechanical linkage.

The output shaft 22 projects outward from the rear transaxle housing 8a in the direction opposite to the input shaft 21 projecting therefrom to the CVT 20, so as to serve as a PTO shaft, and is coaxially and not-relatively rotatably engaged through a sleeve coupling to a pump shaft 40a of the hydraulic pump 40 provided in a pump housing 8b. The pump housing 8b is attached to the rear transaxle housing 8a by spline engagement.

A pair of supply/discharge oil passages 50a and 50b, preferably constructed by pressure oil pipes, are extended from the hydraulic pump 40, and connected to a drive mode switching valve 44. Also, a pair of supply/discharge oil passages 51a and 51b, preferably constructed by pressure oil pipes, are extended from the hydraulic motor 41 of the front transaxle 13, and connected to the drive mode switching valve 44.

The drive mode switching valve 44 is switched between a two-wheel drive position and a four-wheel drive position. When the valve 44 is in the four-wheel drive position, the oil passage 50a is connected to the oil passage 51 a, and the oil passage 50b is connected to the oil passage 51b.

Accordingly, the hydraulic pump 40 attached to the rear transaxle 8 is hydraulically connected to the hydraulic motor 41 of the front transaxle 13 so as to construct an HST, whereby power from the rear transaxle 8 is transmitted to the front transaxle 13 so that the utility vehicle travels with the four-wheel drive.

When the valve 44 is in the two-wheel drive position, the oil passage 50a is connected to the oil passage 50b, and the oil passage 51a is connected to the oil passage 51b, thereby constructing independent closed circuits including the respective hydraulic pump 40 and motor 41.

Therefore, the front transaxle 13 is isolated from driving force of the rear transaxle 8, whereby the utility vehicle travels by driving only the rear wheels 10. In addition, by connecting the oil passage 50a to the oil passage 50b, the hydraulic pump 40 is freely rotated with the rotation of the output shaft 22. By connecting the oil passage 51a to the oil passage 51b, the hydraulic motor 41 is freely rotated with the rotation of the front wheels 15 following the rotation of the rear wheels 10.

The output shaft 22 serves as a pump shaft of the hydraulic pump 40. The output shaft 22 is disposed on the downstream of the sub speed change transmission mechanism in the rear transaxle 8, that is, the rotation speed and direction of the output shaft 22 are switched by shift of the clutch slider 32. Accordingly, drive speed and direction of the hydraulic pump 40 corresponds to the change of speed and drive direction of the rear wheels 10 by the sub speed change transmission mechanism, whereby the drive of the front wheels 15 can be easily synchronized with the drive of the rear wheels 10 without providing a special mechanism in the front transaxle 13.

Explanation will be given of the first embodiment of the rear transaxle 8 and the drive linkage thereof connected to the engine 7 shown in Fig. 3. Explanation of the same members having the same functions as those of Fig. 2, which are designated by the same numerals, is omitted. The rear transaxle 8 of this embodiment is drivingly connected to the engine 7 through not the CVT but an HST. This HST is constructed by fluidly connecting the hydraulic pump 40 to a hydraulic motor 45 through a hydraulic circuit.

The hydraulic pump 40 is attached to the engine 7 so that the output shaft 7a of the engine 7 serves as a pump shaft of the hydraulic pump 40. The hydraulic motor 45 is attached to the rear transaxle housing 8a so that the input shaft 21 of the rear transaxle 8 serves as a motor shaft of the hydraulic motor 45.

A pump housing 7b is attached to one of sides of the engine 7, and the output shaft 7a is inserted into the pump housing 7b. The pump shaft 40a of the hydraulic pump 40 is coaxially and not-relatively rotatably connected to the output shaft 7a by means, such as spline engagement with a sleeve coupling. Furthermore, the pump shaft 40a also serves as a drive shaft of a charge pump 43 stored in the pump housing 7b. Oil discharged from the charge pump 43 can be used as not only supplementary oil for the HST but also drive oil for the power steering cylinder 19.

A motor housing 8c is attached to the same left or right side end of the rear transaxle housing 8a with the pump housing 7b, and the input shaft 21 is inserted into the motor housing 8c. A motor shaft 45a of the hydraulic motor 45 is coaxially and not-relatively rotatably connected to the input shaft 21 by means, such as spline engagement with a sleeve coupling. In this embodiment, the hydraulic motor 45, fluidly connected to the hydraulic pump 40, is disposed separately from the hydraulic pump 40. Alternatively, the hydraulic motor 45 may be disposed together with the hydraulic pump 40 in a common housing so that the hydraulic pump 40 and motor 45 are concentrically disposed on the side of the engine 7.

With respect to the supply/discharge oil passages 50a and 50b, connecting the hydraulic pump 40 to the drive mode switching valve 44, the hydraulic motor 45 is interposed at the middle portion of the oil passage 50b. Preferably, a pressure oil pipe is interposed between the pump housing 7b and the motor housing 8c so as to serve as a part of the oil passage 50b between the hydraulic pump 40 and the hydraulic motor 45, and pressure oil pipes are interposed between the pump housing 7a and the motor housing 8c so as to serve as the oil passage 50a and a part of the oil passage 50b between the hydraulic motor 45 and the drive mode switching valve 44, respectively. Similarly to such oil passages 50a and 50b, the oil passages 51a and 51b are extended from the hydraulic motor 41 of the front transaxle 13 and connected to the drive mode switching valve 44.

When the drive mode switching valve 44 is turned into the four-wheel drive position, the oil passage 50a is connected to the oil passage 51a, and the oil passage 50b is connected to the oil passage 51b, thereby constructing a HST that two hydraulic motors 41 and 45 are connected in series to the common hydraulic pump 40. Namely, oil discharged from the hydraulic pump 40 is supplied to the hydraulic motor 45 for driving the rear wheels 10 and to the hydraulic motor 41 for driving the front wheels 15, whereby the utility vehicle travels with the four-wheel drive. On the other hand, when the drive mode switching valve 44 is turned into the two-wheel drive position, the oil passage 50a is connected to the oil passage 50b, and the oil passage 51a is connected to the oil passage 51b. Accordingly, a closed HST circuit comprising the hydraulic pump 40 and the hydraulic motor 45 for driving the rear wheels 10 is constructed so that pressure oil from the hydraulic pump 40 is not supplied to the hydraulic motor 41 for driving the front wheels 15, whereby the utility vehicle travels with the two-wheel drive.

With regard to the rear transaxle 8, the hydraulic pump 40 is variable in capacity. By switching a slant direction of a movable swash plate 40b of the hydraulic motor 40, the oil discharge direction of the hydraulic pump 40 is switched so as to switch the rotation direction of the hydraulic motors 45 and 41. Accordingly, a gear train for rearward traveling interposed between the input shaft 21 and the output shaft 22 in the housing 8a, which is similar to the first embodiment, is not required for the second embodiment of the rear transaxle 8. Therefore, a margin space is generated on the input shaft 21 in the housing 8a. By utilizing the margin, a torque sensor 60 is provided on the input shaft 21 for controlling the capacity of the hydraulic pump 40 corresponding to load applied on the traveling rear wheels 10. In detail, the input shaft 21 is divided into a first portion 21a toward the hydraulic motor 45 and a second portion 21b toward the differential gear mechanism 34. The low speed drive gear 25, the high speed drive gear 24 and the rotation sensor 23 are provided on the second portion 21b. A relative rotational displacement between the first portion 21a and the second portion 21b of the input shaft 21 is transformed into a thrust force serving as a detected load torque of the rear wheels 10 detected by the torque sensor 60.

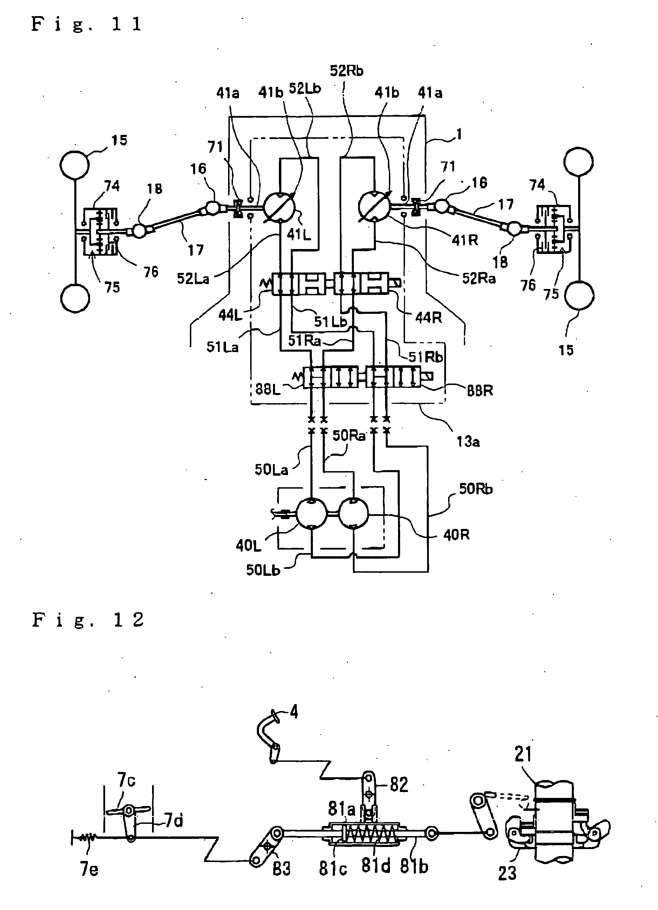

The torque sensor 60 is operatively interlocked (electrically or mechanically) with the swash plate 40b of the hydraulic pump 40 so that, when the torque sensor 60 detects load torque more than a set value, the swash plate 40b is tilted to a smaller angle for deceleration in correspondence to the detected value. The load control of the hydraulic pump 40 will be described in detail later according to Fig. 12. On the other hand, the rotation sensor 23 is operatively interlocked with the throttle of the engine 7, similarly to the above-mentioned rotation sensor 23, thereby constructing an engine governor. Instead of the detection of torque, the control of the HST corresponding to the engine load may be performed based on the detection of oil pressure of the HST. The construction thereof is described later according to Figs. 10 and onward.

Explanation will be given of the second embodiment of the rear transaxle 8 and the drive linkage of the rear transaxle 8 connected to the engine 7 shown in Fig. 4. Explanation of the same members having the same functions as those of the first embodiment shown in Fig. 3, which are designated by the same numerals, is omitted. In this embodiment, the drive linkage of the rear transaxle 8 connected to the engine 7 uses the HST, similar to the second embodiment. Namely, the HST is constructed by fluidly connecting the hydraulic pump 40 to the hydraulic motor 45 through a hydraulic circuit. The hydraulic pump 40 is attached to the engine 7 so that the output shaft 7a of the engine 7 serve as a pump shaft of the hydraulic pump 40. The hydraulic motor 45 is attached to the rear transaxle housing 8a so that the input shaft 21 of the rear transaxle 8 serves as a motor shaft of the hydraulic motor 45. Similar to the second embodiment, oil discharged from the hydraulic pump 40 can be supplied to the hydraulic motor 41 of the front transaxle 13 through the drive mode switching valve 44.

A different point of the second embodiment from the first embodiment, in which the hydraulic motor 45 is a fixed capacity type hydraulic motor fixed onto the outside of the rear transaxle housing 8a, is that the hydraulic motor 45 of this embodiment is a variable capacity type hydraulic motor having a movable swash plate 45b, and is housed within the rear transaxle housing 8a. Namely, in addition to reduction ratio control of the HST as a main speed change transmission mechanism by controlling the position of the movable swash plate 40b of the hydraulic pump 40, reduction ratio control of the HST as a sub speed change transmission mechanism by controlling the position of the movable swash plate 45b of the hydraulic motor 45 is performed.

Accordingly, in the rear transaxle housing 8a, the gear train for sub speed change is not required. Therefore, a margin space is expanded in the housing 8a, so as to dispose the hydraulic motor 45 within the housing 8a, thereby miniaturizing the whole rear transaxle 8.

In addition, in the rear transaxle housing 8a of this embodiment, a diametrically smaller gear 61 is fixed on the input shaft 21 extended as the motor shaft of the hydraulic motor 45, the rotation sensor 23 is provided on the input shaft 21, and a diametrically larger gear 62 is freely rotatably fitted on the output shaft 22 so as to always engage with the smaller gear 61, thereby constructing a speed reduction gear train between the shafts 21 and 22. The torque sensor 60 is interposed between the larger gear 62 and the output shaft 22. Namely, while the gear 62 drivingly engages with the input shaft 21, and the output shaft 22 drivingly engages with the differential gear mechanism 34, the torque sensor 60 of this embodiment senses a relative rotation of the output shaft 22 to the gear 62 so as to detect load torque.

Next, explanation will be given of the first embodiment of the front transaxle 13 shown in Fig. 5. The mechanical differential gear mechanism 70 is provided in the front axle housing 13a, and differentially connects the left and right front axles 14 with each other. A differential lock member 70a is provided on one of the front axles 14. A bull gear 70b of the differential gear mechanism 70 always engages with a motor gear 41c fixed on a motor shaft 41a of the hydraulic motor 41 housed in the front axle housing 13a.

A pair of supply/discharge ports to the hydraulic motor 41 is provided on the outside of the front axle housing 13a. The above-mentioned oil passages 51a and 51b for circulating pressurized oil between the hydraulic motor 41 and the hydraulic pump 40 are constructed by pressure oil pipes, which are extended from the drive mode switching valve 44 and connected to the supply/discharge ports. Accordingly, the hydraulic motor 41 is driven so as to drive the left and right axles 14 through the differential gear mechanism 70,

In addition, the hydraulic motor 41 is a variable capacity type hydraulic motor, which has a movable swash plate 41b operatively connected to any part of a linkage way between the steering wheel 2 and the steerable front wheels 15. As the turn angle of the steering wheel 2 is increased, the movable swash plate 41b is tilted to reduce its slant angle so as to increase rotary speeds of the front wheels 15, whereby relative rotary speeds of the front wheels 15 to those of the rear wheels 10 become suitable to turning circles of the front and rear wheels 15 and 10 during turning of the vehicle. It is similar to the later-discussed second to fourth embodiments of the front transaxle 13 shown in Figs. 6 to 8.

As the above mentioned, each of the axles 14 is drivingly connected to the front wheel 15 through the universal joints 16 and 18 and the propeller shaft 17, and the dry type single-disk brake 15b is attached to the center shaft 15a of each front wheel 15 connected to the universal joint 18.

It is satisfactory if the rotation speeds of the front wheels 15 caused by the drive of rear wheels 10 and friction against the ground surface are balanced with the rotation speeds thereof caused by driving of the hydraulic motor 41. However, for example, for a while after the engine 7 starts, the rotation speed of the hydraulic pump 40 is still low. Due to the characteristic of the slowly rotating hydraulic motor 41 in volume efficiency, a rotary speed of the hydraulic motor 41 receiving the small amount of pressurized oil has a rotation speed lower than a value balanced with the rotation speed of the front wheels 15 caused by the friction against the ground surface. As a result, the hydraulic motor 41 is rotated by rotation of the front wheels 15 so that the hydraulic motor 41 reversely drives the hydraulic pump 40, thereby causing back pressure phenomenon. The phenomenon causes braking effect on the output shaft 22 so as to worsen traveling stability. Therefore, to prevent power to be transmitted from the front wheels 15 to the hydraulic motor 41, a clutch 71 is interposed between each front axle 14 and the universal joint 16 connecting the front axle 14 to the propeller shaft 17. Preferably, the clutches 71 are two-way clutches corresponding to the forward/backward traveling direction change. Alternatively, the clutches 71 may be one-way clutches so as to correspond to only one of the forward and backward traveling directions.

The typical two-way clutch 71 has concentric inner and outer wheels, between which concentric outer and inner cages holding a plurality of sprags are disposed so that the sprags are disposed radially around the common axis of the inner and outer wheels. The inner wheel is disposed on input side to be drivingly connected to the hydraulic motor 41 through the front axle 14, and the outer wheel is disposed on output side to be drivingly connected to the front wheel 15. Each of the sprags has an inner cam surface toward the outer peripheral surface of the inner wheel, and an outer cam surface toward the inner peripheral surface of the outer wheel.

When the vehicle travels normally, the input side inner wheel rotates relatively faster than the output side outer wheel, so that the rotation of the outer cage delays after that of the inner cage. As a result, the sprags tilt from the radial directions of the inner and outer wheels so that the inner cam surfaces of the sprags are pressured against the outer peripheral surface of the inner wheel, and the outer cam surfaces are pressured against the inner peripheral surface of the outer wheel. In this way, the sprags are fitted to both the inner and outer wheels, so as to allow the torque of the inner wheel to the outer wheel, thereby transmitting the output force of the hydraulic motor 41 to the front wheel 15.

If the vehicle travels in the state that the rotary speed of the hydraulic motor 41 is still low immediately after the engine 7 starts, the output side outer wheel rotates relatively faster than the input side inner wheel, so that relative rotation between the inner and outer cages is canceled. As a result, the sprags are oriented in the radial directions of the inner and outer wheels so that the inner and outer cam surfaces of the sprags are separated from the outer peripheral surface of the inner wheel and the inner peripheral surface of the outer wheel, thereby isolating the outer wheel from the torque of the inner wheel, and preventing the output force of the hydraulic motor 41 to be transmitted to the front wheel 15.

Alternatively, the two-way clutch 71 may be disposed in the front transaxle housing 13a, and drivingly interposed between the front axle 14 and a bevel differential side gear of the differential gear mechanism 70, or alternatively, it may be interposed between the front wheel 15 and the center shaft 15a thereof.

Especially, the clutch 71 is advantageous for the vehicle having the first embodiment of the rear transaxle 8, where the transmission shaft of the rear transaxle 8 for driving the rear wheels 10 also serves as the pump shaft of the hydraulic pump 40, and only the single hydraulic motor 41 for driving the front wheels 15 is fluidly connected to the hydraulic pump 40, however, the drive of the front wheels 15 is not completely synchronized to the drive of the rear wheels 10. The vehicle having either the second or third embodiment of the rear transaxle 8 does not require the clutches 71, because the hydraulic motors 41 and 45 for driving the front and rear wheels 15 and 10 are fluidly connected in series to the hydraulic pump 40, that is, the front wheels 15 are driven substantially completely synchronously to the rear wheels 10. Also, in each of the embodiments shown in Figs. 6 to 11, the front transaxle 13 is provided with the clutches 71 for the respective front wheels 15. Alternatively, in any of the embodiments, the clutches 71 may be omitted by using the rear transaxle 8 of the second or third embodiment.

In each of the front transaxles 13 in the second to fifth embodiments in Figs. 6 tv .9, a pair of hydraulic motors 41, replacing the mechanical differential gear mechanism 70, are provided to the respective front axles 14 so as to serve as a hydraulic differential unit for allowing differential rotation of the front wheels 15. The hydraulic motors 41 are connected to the hydraulic pump 40 in parallel, so that the oil supply from the hydraulic pump 40 is distributed between the hydraulic motors 41. However, when one of the left and right front wheels 15 is excessively loaded, the hydraulic motor 41 driving the front wheel 15 free from the load is supplied with most of the oil from the hydraulic pump 40, and the hydraulic motor 41 driving the loaded front wheel 15 is supplied with less oil. For example, when one front wheel 15 falls into a ditch, load on the falling front wheel 15 becomes excessively small so that oil concentrically flows to the hydraulic motor 41 driving the falling front wheel 15. As a result, the hydraulic motor 41 driving the other front wheel 15 is hardly driven, and the utility vehicle cannot escape from the ditch.

To solve the problem, in each of embodiments in Figs. 6 to 9, the front transaxle 13 is provided with means for restricting differential rotation of the hydraulic motors 41. Especially attaching importance to this means, explanation will be given of the second to fifth embodiments of the front transaxle 13.

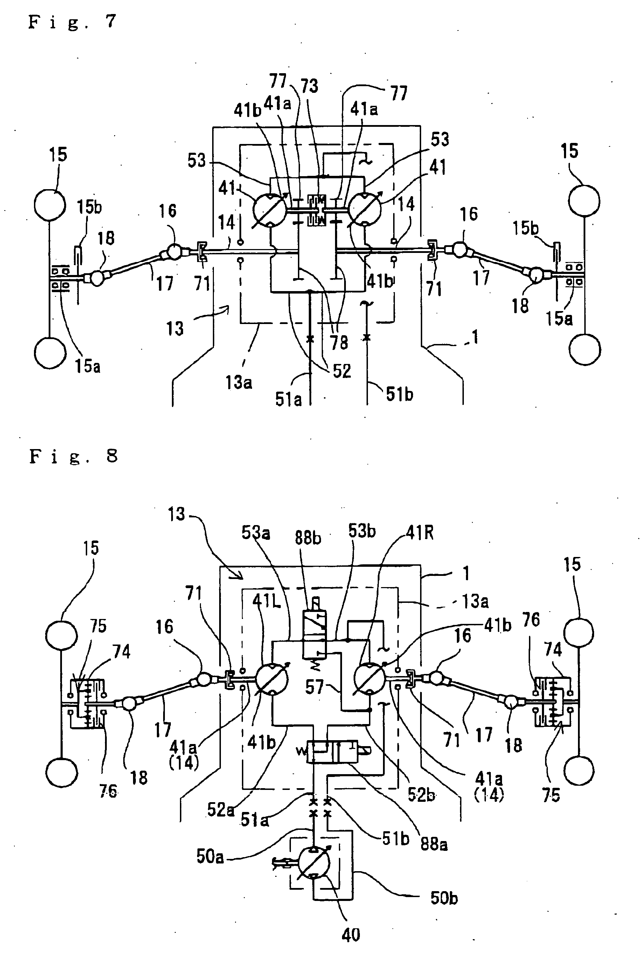

The front transaxle 13 in each of the second and third embodiments of Figs. 6 and 7, a parallel circuit including the hydraulic motors 41 is interposed between the oil passages 51a and 51b connected to the drive mode switching valve 44, so as to connect the hydraulic motors 41 in parallel between the oil passages 51a and 51b. The parallel circuit comprises bifurcating oil passages 52 connecting the hydraulic motors 41 to the oil passage 51a, and bifurcating oil passages 53 connecting the hydraulic motors 41 to the oil passage 51b. In each of the front transaxles 13 of the fourth and fifth embodiments in Figs. 8 and 9, the hydraulic motors 41 are connected to the hydraulic pump 40 in parallel through the drive mode switching valve 44, similar to the second and third embodiments. However, each of the front transaxles 13 of the fourth and fifth embodiments is provided with later-discussed alternative differential restriction mean interposed between the motors 41.

With regard to the second embodiment shown in Fig. 6, the motor shafts 41a of the hydraulic motors 41 are extended laterally outward to serve as the front axles 14 (or drivingly connected to the front axles 14 coaxially). The motor shafts 41a are also extended laterally inward from the hydraulic motors 41 so as to be connected to each other through a mechanical limited slip mechanism 73 for restricting differential rotation of the motor shafts 41a.

A speed reduction gear casing 74 is interposed between each front wheel 15 and each universal joint 18 connecting the front wheel 15 to the propeller shaft 17. A transmission shaft 18a from the universal joint 18 and the center shaft 15a of the front wheel 15 are inserted into the speed reduction gear casing 74 so as to face to each other. A planetary gear type speed reduction gear mechanism 75 is interposed between the shafts 18a and 15a in the speed reduction gear casing 74. Any alternative speed reduction mechanism may be interposed between the shafts 18a and 15a. In the speed reduction gear casing 74, a brake 76 is provided on the transmission shaft 18a. Preferably, the brake 76 is a dry single-disk brake.

With regard to the third embodiment shown in Fig. 7, the motor shafts 41a are connected to each other through the mechanical limited slip mechanism 73. In the front axle housing 13a, each front axle 14 is pivotally supported in parallel to each motor shaft 41 a of the hydraulic motor 41. A diametrically smaller gear 77 is fixed on the motor shaft 41a, and engages with a diametrically larger gear 78 fixed on the front axle 14, thereby constructing a speed reduction gear train.

Accordingly, the center shaft 15a of the front wheel 15 is directly connected to the universal joint 18 without the speed reduction gear casing 74 between the front wheel 15 and the universal joint 18 as shown in the second embodiment, and the dry type single-disk brake 15b is provided on the center shaft 15a of the front wheel 15. Speed reduction gear mechanisms need not to be provided onto the respective left and right front wheels 15, thereby reducing cost.

In the second embodiment of the front transaxle 13, the motor shafts 41a mutually connected through the limited slip mechanism 73 are extended as the front axles 14 and connected to the respective speed reduction gear mechanisms in the speed reduction gear casings 74 attached onto the respective front wheels 15, and the limited slip mechanism 73 connects the motor shafts 41a to each other. On the contrary, in the third embodiment of the front transaxle 13, the motor shafts 41a are drivingly connected to the respective front axles 14 on the downstream side through the speed reduction gear trains including the gears 77 and 78, thereby reducing the torque required for the connection of the motor shafts 41a via the limited slip mechanism 73, and thereby reducing the size of the limited slip mechanism 73.

In the fourth embodiment shown in Fig. 8, to interpose a speed reduction mechanism between each of the hydraulic motors 41L and 41R and each front wheel 15, the speed reduction gear casing 74 incorporating the speed reduction gear mechanism 75 and the brake 76 is interposed between the front wheel 15 and the universal joint 18, similar to the second embodiment. In this embodiment, a hydraulic circuit structure for the pair of hydraulic motors 41L and 41R is created so that the left and right hydraulic motors 41L and 41R, which are usually connected in parallel to the hydraulic pump 40, can be optionally connected in series to the hydraulic pump 40 so as to produce differential lock effect on the front wheels 15.

Explanation will be given of the hydraulic circuit for driving the hydraulic motors 41L and 41R in the front transaxle 13 of this embodiment. One of the oil passages 51a from the drive mode switching valve 44 is always (whether the valve 44 is disposed at a differential lock position or at a differential lock cancel position) connected through a first differential lock valve 88a to an oil passage 52a connected to one of the supply/discharge ports of one of the hydraulic motors 41 (the left hydraulic motor 41L in this embodiment). The other supply/discharge port of the hydraulic motor 41L is connected to a second differential lock valve 88b through an oil passage 53a. Oil passages 53b and 57 from the supply/discharge ports of the other hydraulic motor 41 (the right hydraulic motor 41R in this embodiment) are connected to the differential lock valve 88b. The oil passage 51b is branched from the oil passage 53b to the drive mode switching valve 44, and an oil passage 52b is branched from the oil passage 57 to the first differential lock valve 88a.

The differential lock valves 88a and 88b are solenoid valves, which are simultaneously switched between differential lock positions and differential unlock positions by operating an operation member (not shown). When solenoids of the differential lock valves 88a and 88b are demagnetized and positioned at the illustrated differential unlock positions, the first differential lock valve 88a bifurcates the oil passage 51a into the oil passages 52a and 52b, each of which is connected to one of the supply/discharge ports of each of the hydraulic motors 41L and 41R, Simultaneously, the second differential lock valve 88b connects the oil passage 53a from the hydraulic motor 41L to not the oil passage 57 but the oil passage 53b so as to connect the other supply/discharge ports of the hydraulic motors 4 1 L and 41R with each other, thereby connecting the hydraulic motors 41L and 41R to the hydraulic pump 40 in parallel. Therefore, oil from the hydraulic pump 40 through the drive mode switching valve 44 is distributed between the hydraulic motors 41L and 41R so that the distribution ratio of oil in quantity between the hydraulic motors 41L and 41R corresponds to a ratio of load therebetween, thereby permitting differential rotation of the hydraulic motors 41L and 41R.

When the solenoids of the differential lock valves 88a and 88b are magnetized and positioned at the differential lock positions, the first differential lock valve 88a separates the oil passage 52b communicating with the hydraulic motor 41R from the oil passage 51a communicating with the drive mode switching Valve 44. The second differential lock valve 88b connects the oil passage 53a from the hydraulic motor 41L to not the oil passage 53b but the oil passage 57. Accordingly, the hydraulic motors 41L and 41R are connected to the hydraulic pump 40 in series, thereby preventing differential rotation of the hydraulic motors 41L and 41R.

A hydraulic valve and circuit structure of the front transaxle 13 of the fifth embodiment shown in Fig. 9 is a structure simplified from that of the fourth embodiment. The oil passage 51a of the drive mode switching valve 44 is always connected to the oil passage 52b of the hydraulic motor 41R, and the oil passage 51b of the drive mode switching valve 44 is always connected to the oil passage 53a of the hydraulic motor 41L, A differential lock valve 88c is provided so as to be switched between a differential unlock position and a differential lock position. The differential unlock position of the differential lock valve 88c is provided for connecting the oil passage 52a from the hydraulic motor 41L and the oil passage 53b from the hydraulic motor 41R to the respective oil passages 51a and 51b. The differential lock position of the differential lock valve 88c is provided for connecting the oil passage 52a of the hydraulic motor 41L and the oil passage 53b of the hydraulic motor 41R to each other so as to block the oil passages 51a and 51b. The differential lock valve 88c is a solenoid valve. When a solenoid of the differential lock valve 88c is demagnetized and positioned at the differential unlock position, the oil passage 52a from one of the supply/discharge ports of the hydraulic motor 41L and the oil passage 52a from one of the supply/discharge ports of the hydraulic motor 41R are connected to the oil passage 51a, Simultaneously, the oil passage 53a from the other supply/discharge port of the hydraulic motor 41L and the oil passage 53a from the other supply/discharge port of the hydraulic motor 41R are connected to the oil passage 51b. Accordingly, the hydraulic motors 41L and 41R are connected to the hydraulic pump 40 in parallel. Therefore, oil supplied from the hydraulic pump 40 through the drive mode switching valve 44 is distributed between the hydraulic motors 41L and 41R so that the distribution ratio of oil in quantity between the hydraulic motors 41L and 41R corresponds to a load ratio between the hydraulic motors 41L and 41R.

When the solenoid of the differential lock valve 88c is magnetized and positioned at the differential lock position, the oil passage 51 a of the drive mode switching valve 44 is connected to the oil passage 51b of the drive mode switching valve 44, through the oil passages 52b and 53b of the hydraulic motor 41R, and through the oil passages 52a and 53a of the hydraulic motor 41L in series. Accordingly, the hydraulic motors 41L and 41R are connected to the hydraulic pump 40 in series, thereby preventing differential rotation of the hydraulic motors 41L and 41R.

In addition, with regard to the fourth or fifth embodiment, an amount of oil flowing to the hydraulic motors 41L and 41R is changed due to whether the connection of hydraulic motors 41L and 41R to the hydraulic pump 40 is in parallel or in series. That is, the rotation speeds of the hydraulic motors 41L and 41R when the differential lock valve 88c is set at the differential lock position are larger than the rotation speeds of the hydraulic motors 41L and 41R when the differential lock valve 88c is set at the differential unlock position. This change of rotation speed of the hydraulic motors 41 L and 41R can be prevented as follows.

In the embodiment of the rear transaxle 8 where a CVT serves as the main speed change transmission mechanism, such as the first embodiment shown in Fig. 2, the hydraulic pump 40 attached to the rear transaxle housing 8a supplies pressurized oil to the hydraulic motor 41 for driving the front wheels 15. To prevent the rotation speed of the hydraulic motors 41L and 41R due to the shift of the differential lock valve 88c, the variable capacity type hydraulic pump 40 is controlled so as to reduce its capacity when the differential lock valve 88c is turned to the differential lock position. Alternatively, the variable capacity type hydraulic motors 41L and 41R are controlled so as to increase their capacities when the differential lock valve 88c is turned into the differential lock position. As a result, the rotation speeds of the axles 14 when the differential lock valve 88c is set at the differential lock position can be substantially equal to those when the differential lock valve 88c is set at the differential unlock position.

If the main speed change transmission mechanism of the rear transaxle 8 is the HST, such as that of the second or third embodiment shown in Fig. 2 or 3, the capacity control of the hydraulic motors 41L and 41R can also be used.

Next, explanation will be given on the sixth embodiment of the front transaxle 13 according to Fig. 10. Similarly to the above-mentioned embodiments, each of the motor shafts 41 a serving as axles is drivingly connected to the front wheel 15 through the universal joints 16, 18 and the propeller shaft 17. With regard to the speed reduction mechanism between each of the hydraulic motors 41L and 41R and each front wheel 15, similar to the second embodiment, the speed reduction gear casing 74 incorporating the speed reduction gear mechanism 75 and the brake 76 is interposed between the front wheel 15 and the universal joint 18.

Explanation will be given of the hydraulic circuit of this embodiment for driving the hydraulic motors 41L and 41R. A differential lock valve 88d always (whether the differential lock valve 88d is set at a differential lock position or at a differential unlock position) connects the oil passage 51 a from the drive mode switching valve 44 to an oil passage 52a which is connected to one of the supply/discharge ports of one of the hydraulic motors 41 (the left hydraulic motor 41L in this embodiment). The other supply/discharge port of the hydraulic motor 41L is connected to an oil passage 54a, and the oil passage 54a is connected to the differential lock valve 88d through an oil passage 54c. An oil passage 52b is extended from one of supply/discharge ports of the other hydraulic motor 41 (the right hydraulic motor 41R in this embodiment) and connected to the differential lock valve 88d. An oil passage 54b is extended from the other port of the hydraulic motor 41 and connected to the differential lock valve 88d through the oil passage 54c, similar to the oil passage 54a connected to the differential lock valve 88d through the oil passage 54c.

The differential lock valve 88d is a solenoid valve which switched between the differential lock position and the differential unlock position by an operation member (not shown). When a solenoid of the differential lock valve 88d is demagnetized and positioned at the illustrated differential unlock position, the differential lock valve 88d bifurcates the oil passage 51a into oil passages 52a and 52b. The oil passage 52a is connected to one of the supply/discharge ports of the hydraulic motor 41L, and the oil passage 52b is connected to the other oil supply/discharge port of the hydraulic motor 41R, Furthermore, the differential lock valve 88d connects the oil passage 54c to the oil passage 51b, thereby connecting the hydraulic motors 41L and 41R to the hydraulic pump 40 in parallel. Therefore, Oil supplied from the hydraulic pump 40 through the drive mode switching valve 44 is distributed between the hydraulic motors 41L and 41R so that the distribution ratio of oil between the hydraulic motors 41L and 41R corresponds to load ratio between the hydraulic motors 41L and 41R, thereby permitting differential rotation of the hydraulic motors 41L and 41R.

On the other hand, when the solenoid of the differential lock valve 88d is magnetized and positioned at the differential lock position, the oil passage 54c is separated from the oil passage 51a communicating with the drive mode switching valve 44. The oil passage 52b is also separated from the oil passage 51a communicating with the drive mode switching valve 44, and is connected to the oil passage 51b. Accordingly, the hydraulic motors 41L and 41R are connected to the hydraulic pump 40 in series, thereby preventing differential rotation between the hydraulic motors 41L and 41R.

In this embodiment, the hydraulic motors 41L and 41R are variable in capacity, Alternatively, the hydraulic motors 41L and 41R may be fixed capacity type hydraulic motors while the hydraulic pump 40 is variable in capacity.

In the sixth embodiment, the differential lock valve 88d is controlled by the unshown operation member. Alternatively, the differential lock valve 88d may be automatically controlled. This automatic control will be explained as follows.

In this embodiment, the hydraulic motors 41L and 41R and the hydraulic pump 40 are provided with sensors (not shown) serving as rotation speed detection means on the motor shafts 41a and the pump shaft 40a, respectively. The sensors are operatively interlocked with the differential lock valve 88d and the drive mode switching valve 44. Rotation speeds of the hydraulic motors 41L, 41R and the hydraulic pump 40 detected by the sensors are referred to as n1, n2 and n3, respectively.

It is now assumed that the utility vehicle is set in the two-wheel drive mode and the differential lock is released in the stationary state of the utility vehicle. When a value N1 obtained by a numerical formula: N1=(n1+n2)/n3 is smaller than a fixed value, at least one of the rear wheels is regarded as being idle, and therefore the utility vehicle is turned into the four-wheel drive mode.

When a value N2 obtained by a numerical formula: N2=2×|n1-n2|/(n1+n2) is larger than a fixed value, one of the left and right front wheels is regarded as being idle, and therefore the differential lock actuation is automatically performed. In addition, such an automatic control also can be adopted to the other embodiments.

By selecting one of the above various front transaxles 13 and one of the various rear transaxles 8 and combining them with each other, various transmission constructions for a four-wheel drive utility vehicle can be provided.

Next, explanation will be given of the seventh embodiment of the front transaxle 13 according to Fig. 11.

Firstly, to be suited to the front transaxle 13 of the seventh embodiment, the rear transaxle 8 comprises tandem hydraulic pumps 40L and 40R shown in Fig. 11. Drive mode switching valves 44L and 44R are provided on the downstream sides of later-discussed differential lock valves 88L and 88R. The other construction of the rear transaxle 8 is the same as that of the first embodiment shown in Fig. 2. However, the construction of the rear transaxle 8 is not limited thereto. The rear transaxle 8 may be provided with the hydraulic motor 45 for driving the rear wheels 10, similar to that of the second or third embodiment shown in Fig. 3 or 4, and at least one of the hydraulic pumps 40L and 40R may be used for driving the hydraulic motors 45. Alternatively, instead of the tandem hydraulic pumps 40L and 40R, the only hydraulic pump 40 may be changed to have two pairs of supply/discharge ports for the front transaxle 13 shown in Fig. 11.

The front transaxle 13 of the seventh embodiment will be explained. Similar to that of the above-mentioned embodiments, each of the motor shafts 41a serving as axles is drivingly connected to the front wheel 15 through the universal joints 16, 18 and the propeller shaft 17. With regard to the speed reduction mechanism between each of the hydraulic motors 41L and 41R and each front wheel 15, the speed reduction gear casing 74 incorporating the speed reduction gear mechanism 75 and the brake 76 is interposed between the from wheel 15 and the universal joint 18, similar to that of the second embodiment.

Explanation will be given of a hydraulic circuit of this embodiment for driving the hydraulic motors 41L and 41R. The differential lock valve 88L always (whether the differential lock valve 88L is set at a differential lock position or at a differential unlock position) connects an oil passage 50La from one of supply/discharge ports of the hydraulic pump 40L to an oil passage 51La. The oil passage 51La is also connected to one of the supply/discharge ports of the hydraulic motor 41L through the drive mode switching valve 44L and an oil passage 52La. An oil passage 52Lb from the other port of the hydraulic motor 41 L is connected to the other port of the hydraulic pump 40L through the drive mode switching valve 44L, an oil passage 51Lb, the differential lock valve 88R and an oil passage 50Lb.

On the other hand, the differential lock valve 88R always (whether the differential lock valve 88R is set at a differential lock position or at a differential unlock position) connects the an oil passage 50Ra from one of supply/discharge ports of the hydraulic pump 40R to an oil passage 51Ra. The oil passage 51Ra is also connected to one of supply/discharge ports of the hydraulic motor 41R through the drive mode switching valve 44R and an oil passage 52Ra. An oil passage 52Rb from the other port of the hydraulic motor 41R is connected to the other port of the hydraulic pump 40R through the drive mode switching valve 44R, an oil passage 51Rb, the differential lock valve 88L and an oil passage 50Rb.

The drive mode switching valves 44L and 44R are simultaneously switched between a two-wheel drive position and a four-wheel drive position. When the valves 44L and 44R are set at the four-wheel drive position, the oil passage 51 La is connected to the oil passage 52La, the oil passage 51Lb is connected to the oil passage 52Lb, the oil passage 51Ra is connected to the oil passage 52Ra, and the oil passage 51 Rb is connected to the oil passage 52Rb. Accordingly, the hydraulic pumps 40L and 40R are hydraulically connected to the hydraulic motors 41L and 41R so as to construct HSTs, thereby transmitting power from the rear transaxle 8 to the front transaxle 13, and whereby the utility vehicle travels with the four-wheel drive.

When the drive mode switching valves 44L and 44R are set at the two-wheel drive position, the oil passage 51La is connected to the oil passage 51Lb, the oil passage 52La is connected to the oil passage 52Lb, the oil passage 51Ra is connected to the oil passage 51Rb, and the oil passage 52Ra is connected to the oil passage 52Rb. Accordingly, an independent circuit including the hydraulic pumps 40L and 40R, and another independent circuit including the hydraulic motors 41L and the hydraulic motor 41R are constructed so as to isolate the front transaxle 13 from driving force of the rear transaxle 8, whereby the utility vehicle travels by driving only the rear wheels 10.

The differential lock valves 89L and 88R are solenoid valves which are simultaneously switched between the differential lock position and the differential unlock position by an operation member (not shown). When solenoids of the differential lock valves 88L and 88R are demagnetized and positioned at the illustrated differential unlock position, the differential lock valve 88L connects the oil passage 51La to the oil passage 51Ra, and the differential lock valve 88R connects the oil passage 51Lb to the oil passage 51Rb, thereby connecting the hydraulic motors 41L and 41R to the hydraulic pumps 40L and 40R in parallel. Therefore, oil supplied oil from each of the hydraulic pumps 40L and 40R through the drive mode switching valves 44L and 44R is distributed between the hydraulic motors 41L and 41R so that the distribution ratio of oil between the hydraulic motors 41L and 41R corresponds to load ratio between the hydraulic motors 41L and 41R, thereby permitting differential rotation of the hydraulic motors 41L and 41R.

On the other hand, when the solenoids of the differential lock valves 88L and 88R are magnetized and positioned at the differential lock position, the hydraulic motor 41L is connected to only the hydraulic pump 40L, and the hydraulic motor 41R is connected to only the hydraulic pump 40R. Accordingly, the hydraulic motors 41L and 41R are stably supplied with sufficient oil from the respective hydraulic pumps 40L and 40R regardless of whether or not load is applied on the left or right front wheel 15, thereby preventing differential rotation of the hydraulic motors 41 L and 4 1 R.

In the embodiment in Fig. 11, the differential lock valves 88L and 88R and the drive mode switching valves 44L and 44R are disposed in the front transaxle housing 13a. Alternatively, these members may be disposed at a rear portion of the utility vehicle.

Next, explanation will be given of a control mechanism of engine rotation speed, which is adoptable to the utility vehicle according to Figs. 12 to 15. A basic engine governor structure (such as to be adopted to the rear transaxle 8 shown in Fig. 2) is shown in Fig. 12. With regard to this basic engine governor, the rotation sensor 23 disposed on the input shaft 21 in the housing 8a of the rear transaxle 8 as shown in Figs. 2 to 4 is interlocked with one end of a piston rod 81b slidably inserted into a cylinder 81a of a throttle actuator 81. The other end of the piston rod 31b is interlocked with a throttle arm 7d provided integrally with a throttle valve 7c of the engine 7. Concretely, an arm 83 is pivoted at its vertical middle point so as to have upper and lower rotatable ends. The other end of the piston rod 81b is pivotally connected to one of the upper and lower rotatable ends of the arm 83. A link member, such as a wire, is extended from the throttle arm 7d and pivotally connected to the other lower or upper rotatable end of the arm 83. The throttle arm 7d is biased by a spring 7e so as to close the throttle valve 7c. In the cylinder 81a, a piston 81c is fixed on the piston rod 81b, and a spring 81d is interposed between the piston 81c and the cylinder 81a. Furthermore, the cylinder 81a is interlocked with the accelerator pedal 4. Concretely, an arm 82 is pivoted at its vertical middle point so as to have upper and lower rotatable ends. The cylinder 81 a is connected to one of the upper and lower rotatable ends of the arm 82. A link member, such as a wire, is extended from the accelerator pedal 4 and pivotally connected to the other lower or upper rotatable end of the arm 82.

In the following description, positions and directions of members are based on those shown Fig. 12. By depressing the accelerator pedal 4, the upper end of the arm 82 is rotated rightward and the lower end thereof is rotated leftward, whereby the cylinder 81a is moved leftward against the biasing force of the spring 81d. The spring 81d is immediately returned so as to push the piston 81c leftward, thereby moving the piston rod 81b leftward. According to this, the upper end of the arm 83 is rotated leftward and the lower end thereof is rotated rightward, whereby the throttle arm 7d is rotated toward the opening side of the throttle valve 7c against the biasing force of the spring. Accordingly, the throttle valve 7c is opened to an opening degree corresponding to the depression of the accelerator pedal 4.

Accordingly, while the input shaft 21 is rotated, the rotation sensor 23 is centrifugally opened to an open degree corresponding to the opening degree of the throttle valve 7c set by the accelerator pedal 4. When the rotation speed of the input shaft 21 becomes lower than the set speed by the accelerator pedal 4, the rotation sensor 23 is centripetally closed and the piston rod 81b is pushed leftward, Accordingly, the upper end of the arm 83 is rotated leftward and the lower end thereof is rotated rightward, whereby the throttle arm 7d is rotated toward the opening side of the throttle valve 7c so as to increase the engine rotation speed.

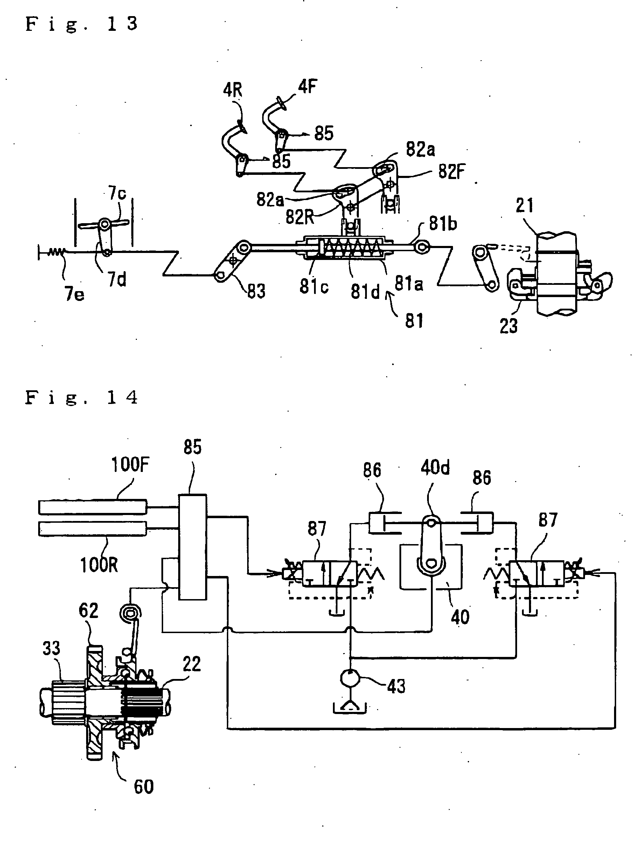

In addition, control mechanisms of engine rotation speed shown in Figs. 13 and 14 are provided for'the case that the rear transaxle 8 shown in Fig. 3 or 4 is provided with the HST serving as the main speed change transmission mechanism, wherein the reduction ratio of the HST is controlled based on the detection of the torque sensor 60. Twin pedals, including a forward traveling pedal 4F and a rearward traveling pedal 4R, are provided as the accelerator pedal 4. Alternatively, the accelerator pedal 4 may be a single seesaw-like arm having both ends thereof serving as a depressed part for forward traveling and a depressed part for backward traveling). The cylinder 81a of the throttle actuator 81 is pivotally connected to lower ends of twin arms 82F and 82R which are integrally rotatable around a horizontal rotary axis through their vertical middle points. Link members, such as wires, are extended from the respective pedals 4F and 4R and pivotally connected to the respective upper ends of the twin arms 82F and 82R. Concretely, slots 82a are formed in the upper end portions of the twin arms 82F and 82R, and the ends of the link members extended from the pedals 4F and 4R are slidably inserted into the respective slots 82a. If one of the pedals 4F and 4R is depressed, the end of the link member extended from the depressed pedal 4F or 4R is moved in the slot 82a, and the end of the link member extended from the other undepressed pedal 4R or 4F remains at the initial position. In this way, when one of the pedals 4F and 4R is depressed, the opening degree of the throttle valve 7c is determined corresponding to the depression of the depressed pedal 4F or 4R.

The forward traveling pedal 4F and the rearward traveling pedal 4R serve as operation members for operating the movable swash plate 40b of the hydraulic pump 40. Depressions 100F and 100R of the pedals 4F and 4R are detected by potentiometers or the like, and detection signals thereof are inputted to a controller 85. A hydraulic actuator of the movable swash plate 40b and electromagnetic valves for controlling the hydraulic actuator will be explained according to Fig. 14. A control arm 40d for controlling the movable swash plate 40b is pivotally supported by the rear transaxle housing 8a. Piston rods of hydraulic cylinders 86 are connected to both sides of the rotatable end of the control arm 40d. Pressurized oil is supplied from the charge pump 43 to the hydraulic cylinders 86 through respective electromagnetic valves 87. Based on the detection value of the depression of the pedal 4F or 4R inputted into the controller 85, the electromagnetic valves 87 are controlled so as to rotate the control arm 40d, thereby setting the slant angle of the movable swash plate 40b corresponding to the depressed position of the pedal 4F or 4R. Furthermore, the slant angle of the swash plate 40b is detected by a potentiometer or the like, and a detection signal thereof is fed back to the controller 85. The controller 85 calculates the active slant angle of the swash plate 40b, compares the slant angle with a value corresponding to the detected value of the depression of the pedal 4F or 4R, and sends a control signal to the hydraulic cylinders 86 so as to cancel an deviation of the swash plate 40b from its desired position corresponding to the depression of the pedal 4F or 4R.

Moreover, the angle of the movable swash plate 40b set as the above is amended appropriately based on the torque detection by the torque sensor 60 used for controlling the engine load. Namely, cam balls are interposed between the output shaft 22 and the diametrically large gear 62 so as to convert a relative rotation of the shaft 22 and gear 62 into a thrust force, which is detected as a torque detection value of the torque sensor 60 by a potentiometer or the like, and analyzed by the controller. When the detected torque is larger than preset value, the electromagnetic valves 87 are controlled so as to reduce the slant angle of the movable swash plate 40b toward the neutral position, thereby reducing the discharge amount of the hydraulic pump 40. The torque sensor 60 shown in Fig. 12 is suited for the case of Fig. 4. Alternatively, the torque sensor 60 may be interposed between the first portion 21a and the second portion 21b of the input shaft 21 in the embodiment shown in Fig. 3, so as to convert a relative rotation of the portions 21a and 21b into a thrust force.

Alternatively, the HST may be controlled in capacity for controlling engine load based on the oil pressure detection of the HST, instead of the detection of the torque sensor 60. Fig. 13 discloses the control mechanism of the engine load based on the oil pressure detection of the HST. This control mechanism comprises the forward traveling pedal 4F, the rearward traveling pedal 4R, the rotation sensor 23, the throttle valve 7c and the throttle actuator 81, similar to that shown in Fig. 11. A hydraulic slider 90 is provided as a sensor for detecting oil pressure in a pair of oil passages between the hydraulic pump 40 and the hydraulic motor 45. The hydraulic slider 90 is an axially slidable spool-like member. Both ends of the hydraulic slider 90 are biased by springs 96 toward a neutral position, and pressed against respective plungers 95F and 95R, A double-acting hydraulic cylinder 94 serves an actuator for operating the swash plate 40b of the hydraulic pump 40. The movable swash plate 40b of the hydraulic pump 40 is operatively interlocked to a piston 94a of the hydraulic cylinder 94, A pair of oil passages are extended from a changeover valve 92 and connected to oil chambers on both sides of the piston 94a. A feedback arm 94b is extended from the piston 94a, and mechanically interlocked with a sleeve 92a disposed on the outer perimeter of the changeover valve 92. Accordingly, the changeover valve 92 is moved in the sleeve 92a and switched from the neutral position to either a forward or backward traveling position. When the piston 94a is moved in the hydraulic cylinder 94, the sleeve 92a is moved in the same direction with the piston 94a so as to return to its initial position relative to the changeover valve 92, thereby controlling the changeover valve 92 to the neutral position.

One of the pair of oil passages between the hydraulic pump 40 and motor 45 in the HST closed circuit is hydraulically higher-pressured during forward traveling of the vehicle, and opened through an orifice to a plunger oil chamber 95a of the plunger 95F. The other oil passage between the hydraulic pump 40 and motor 45 in the HST closed circuit is hydraulically higher-pressured during rearward traveling of the vehicle, and opened through an orifice to a plunger oil chamber 95a of the plunger 95R. The pressurized oil introduced into one of the oil chambers 95a pushes the corresponding plunger 95F or 95R, thereby moving the hydraulic slider 90 toward the opposite plunger side.

An engagement pin 91a is provided on a middle portion of a link rod 91 serving as an operation member of the changeover valve 92, and is slidably inserted into an axial slot 90a of the hydraulic slider 90. The link rod 91 passes through the hydraulic slider 90. A rocking arm 93 is formed at one end thereof with a receptacle part 93a, in which oppositely biasing springs 93b pinch a tip of the link rod 91. The biasing force of each spring 93b corresponds to set load. The rocking arm 93 has a pivot point at its middle portion. Link members (such as rods or wires) are extended from the forward traveling pedal 4F and the rearward traveling pedal 4R, respectively, and connected to an end of the rocking arm 93 opposite to the receptacle part 93a.

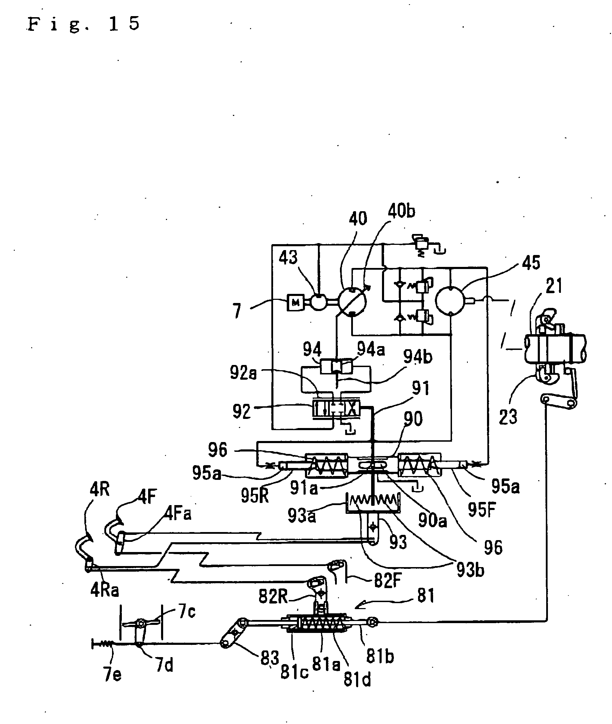

In this regard, a rocking arm 4Fa is fixed at its vertical middle pivot point to the forward traveling pedal 4F so that the rocking ann 4Fa and the forward traveling pedal 4F are rotatable centered on the vertical middle pivot point of the rocking arm 4Fa. The rocking arm 4Fa has opposite upper and lower ends with the vertical middle pivot point therebetween. The above-mentioned link member from the forward traveling pedal 4F is extended from the upper end of the rocking arm 4Fa and connected to the end of the rocking arm 93 opposite to the receptacle part 93a. A rock arm 4Ra is fixed at its upper end to the rearward traveling pedal 4Ra so that the rocking arm 4Ra and the rearward traveling pedal 4Ra are rotatable centered on the upper end of the rocking arm 4Ra. The above-mentioned link member from the rearward traveling pedal 4R is extended from a lower end of the rocking arm 4Ra opposite to the upper pivotal end thereof, and connected to the end of the rocking arm 93 opposite to the receptacle part 93a. Therefore, the arm 93 is rotated in a direction selected from opposite directions depending upon whether the forward traveling pedal 4F or the rearward traveling pedal 4R is depressed. According to Fig. 15, when the forward traveling pedal 4F is depressed, the upper end of the rocking arm 4Fa is rotated leftward, whereby the receive part 93a of the rocking arm 93 is rotated rightward. On the other hand, when the rearward traveling pedal 4R is depressed, the lower end of the rocking arm 4Ra is rotated rightward, whereby the receive part 93a of the rocking arm 93 is rotated leftward. Incidentally, link members are extended from the lower ends of the rocking arms 4Fa and 4Ra, and connected to the respective arms 82F and 82R for operating the throttle actuator 81 in the same way as those shown in Fig, 13.

The following explanation is based on positions and directions of parts shown in Fig. 15. When the forward traveling pedal 4F is depressed, the rocking arm 93 is rocked clockwise so as to move the link rod 91 rightward through the left spring 93. The engagement pin 91a is moved rightward in the slot 90a of the hydraulic slider 90 and abuts against the right end of the slot 90a, Accordingly, the changeover valve 92 is shifted from the neutral position to the forward traveling position (disposed leftward in Fig. 15), and the piston 94a of the hydraulic cylinder 94 moves so as to tilt the movable swash plate 40b from the neutral position to an angle in its forward traveling range. Then, the changeover valve 92 is returned to the neutral position by the feedback from the piston 94a. As a result, the tilt angle of the movable swash plate 40b is kept.

While the hydraulic motor 45 driven by receiving pressurized oil from the hydraulic pump 40 is actuated for forward driving, pressure in the oil passage communicated with the oil chamber 95a of the plunger 95F becomes higher. The oil pressure in the higher-pressure oil passage is introduced to the oil chamber 95a of the plunger 95F through the orifice. After the pressure in the oil chamber 95a becomes higher than the biasing force of the spring 96, the plunger 95F pushes the hydraulic slider 90 leftward, At this time, since the engagement pin 91a is at the right end of the slot 90a, the engagement pin 9 1 a is pushed by the hydraulic slider 90 so as to be moved leftward. Therefore, the linkage rod 91 is pushed leftward and the changeover valve 92 is shifted from the neutral position to the backward traveling position (disposed rightward in Fig. 15), so that the movable swash plate 40b is moved toward the neutral position so as to reduce the tilt angle thereof, thereby reducing the discharge amount of the hydraulic pump 40. This shift is continued until the pressure of pressurized oil introduced to the oil chamber 95a of the plunger 95F becomes lower than the biasing force of the spring 96. In this way, load applied on the HST is reduced automatically. The similar control is also performed at the time of depressing the rearward traveling pedal 4R.

Accordingly, when the oil pressure in the oil passage at the high pressure side becomes higher than the set amount, the hydraulic slider 90 reduces the discharge amount of the hydraulic pump 40 from a value set in correspondence to the depression of one of the forward traveling pedal 4F and the rearward traveling pedal 4R.

## Claims

1. A four wheel drive vehicle comprising:
A first transaxle (8) driving a first axle (9) and a second transaxle (13) driving a second axle (14) disposed behind and before a prime mover (7), respectively;
a hydraulic motor (41) for driving the second axle (14), provided in the second transaxle (13);
a hydraulic pump (40) for supplying oil to the hydraulic motor (41) of the second transaxle (13), the hydraulic pump (40) having a variable capacity, and
a speed change transmission mechanism for driving the first axle (9), provided in the first transaxle (8), capable of switching rotation direction, and drivingly connected to the prime mover (7);
**characterized in that**
the hydraulic pump (40) is disposed in a pump housing (7b) attached to the prime mover (7) so as to be driven by the prime mover (7); and the speed change transmission mechanism includes
a rotary speed sensor (23) detecting rotation speed of the first axle (9) for controlling a rotation speed of the prime mover (7).

2. A four wheel drive vehicle as set forth in claim 1, wherein the speed change transmission mechanism of the first transaxle (8) comprises: a first speed change transmission mechanism provided out of the housing (8a) of the first transaxle (8); and a second speed change transmission mechanism provided within the housing (8a), wherein the first speed change transmission mechanism is drivingly disposed on the upstream of the second speed change transmission mechanism.

3. A four wheel drive vehicle as set forth in claim 1, wherein the speed change transmission mechanism of the first transaxle (8) comprises a hydrostatic transmission constructed by fluidly connecting another hydraulic motor (45) for driving the first axle (9), to the hydraulic pump (40) for supplying pressurized oil to the hydraulic motor (41) of the second transaxle (13).

4. A four wheel drive vehicle as set forth in claim 3, wherein a function of switching rotation direction of the speed change transmission mechanism is produced by changing a discharge direction of the hydraulic pump (40).

5. A four wheel drive vehicle as set forth in claim 3, wherein an output shaft (7a) of the prime mover (7) serves as a pump shaft of the hydraulic pump (40).

6. A four wheel drive vehicle as set forth in claim 3, wherein the speed change transmission mechanism comprises: the hydrostatic transmission provided out of the housing (8a) of the first transaxle (8); and a multi-speed stepped second speed change transmission mechanism provided within the housing (8a) on the downstream of the hydrostatic transmission, and wherein a motor shaft (45a) of the hydraulic motor (45) for driving the first axle (9) serves as an input shaft of the second speed change transmission mechanism.

7. A four wheel drive vehicle as set forth in claim 3, wherein the hydraulic motor (45) is variable in capacity and housed in the housing (8a) of the first transaxle (8) supporting the first axle (9).

8. A four wheel drive vehicle as set forth in claim 1, wherein a pair of left and right axles serve as the second axle (14), and wherein a differential mechanism (70) is drivingly interposed between the hydraulic motor (41) and the pair of left and right second axles.

9. A four wheel drive vehicle as set forth in claim 1, wherein a pair of left and right axles serve as the second axle (14), and a pair of hydraulic motors serve as the hydraulic motors (41) for driving the respective left and right second axles.

10. A four wheel drive vehicle as set forth in claim 9, wherein motor shafts of the hydraulic motors (41) are mechanically connected with each other through a differential limit mechanism (73).

11. A four wheel drive vehicle as set forth in claim 9, wherein the hydraulic motors (41) are connected in parallel to the hydraulic pump (40) of the first transaxle (8) so as to permit differential rotation of the second axles, and the parallel connection of the hydraulic motors (41) can be turned into series connection.

12. A four wheel drive vehicle as set forth in claim 1, wherein a clutch (71) is interposed between the hydraulic motor (41) and the second axle (14) of the second transaxle (13) so as to prevent power transmission from the second axle (14) to the hydraulic motor (41) and permit power transmission from the hydraulic motor (41) to the second axle (14).

13. A four wheel drive vehicle as set forth in claim 1, wherein the four wheel drive vehicle is a utility vehicle having a cargo deck (6), and wherein the first transaxle (8) is disposed below the cargo deck (6).

## Patentansprüche

1. Fahrzeug mit Vierradantrieb, umfassend:
eine eine erste Achse (9) antreibende erste Getriebe-Einheit (8) und eine eine zweite Achse (14) antreibende zweite Getriebe-Einheit (13), angeordnet hinter und vor einer Kraftmaschine (7),
einen in der zweiten Getriebe-Einheit (13) vorgesehenen Hydraulikmotor (41) zum Antreiben der zweiten Achse (14),
eine Hydraulikpumpe (40) zur Versorgung des Hydraulikmotors (41) der zweiten Getriebe-Einheit (13) mit Öl, wobei die Hydraulikpumpe (40) eine veränderliche Leistung aufweist, und
eine zur Übertragung einer Geschwindigkeitsveränderung bestimmte Vorrichtung zum Antreiben der ersten Achse (9), wobei die Vorrichtung in der ersten Getriebe-Einheit (8) vorgesehen, die Drehrichtung umzuschalten in der Lage und auf antreibende weise mit der Kraftmaschine (7) verbunden ist,
**dadurch gekennzeichnet, dass** die Hydraulikpumpe (40) in einem an der Kraftmaschine (7) befestigten Pumpengehäuse (7b) so angeordnet ist, dass sie von der Kraftmaschine (7) angetrieben wird, und
die zur Übertragung einer Geschwindigkeitsveränderung bestimmte Vorrichtung einen Drehgeschwindigkeitsaufnehmer (23) umfasst, welcher die Drehgeschwindigkeit der ersten Achse (9) erkennt, um eine Drehgeschwindigkeit der Kraftmaschine (7) zu steuern.

2. Fahrzeug mit Vierradantrieb nach Anspruch 1, wobei die in der ersten Getriebe-Einheit (8) vorgesehene zur Übertragung einer Geschwindigkeitsveränderung bestimmte Vorrichtung eine außerhalb des Gehäuses (8a) der ersten Getriebe-Einheit (8) vorgesehene zur Übertragung einer Geschwindigkeitsveränderung bestimmte erste Vorrichtung und eine innerhalb des Gehäuses (8a) vorgesehene zur Übertragung einer Geschwindigkeitsveränderung bestimmte zweite Vorrichtung umfasst, wobei die zur Übertragung einer Geschwindigkeitsveränderung bestimmte erste Vorrichtung auf antreibende Weise vor der zur Übertragung einer Geschwindigkeitsveränderung bestimmten zweiten Vorrichtung angeordnet ist.

3. Fahrzeug mit Vierradantrieb nach Anspruch 1, wobei die in der ersten Getriebe-Einheit (8) vorgesehene zur Übertragung einer Geschwindigkeitsveränderung bestimmte Vorrichtung ein hydrostatisches Getriebe umfasst, welches **dadurch** aufgebaut ist, dass zwischen einem weiteren Hydraulikmotor (45) zum Antreiben der ersten Achse (9) und der Hydraulikpumpe (40) zur Versorgung des Hydraulikmotors (41) der zweiten Getriebe-Einheit (13) mit Drucköl eine Strömungsverbindung hergestellt wird.

4. Fahrzeug mit Vierradantrieb nach Anspruch 3, wobei eine Funktion einer Drehrichtungsumschaltung durch die zur Übertragung einer Geschwindigkeitsveränderung bestimmte Vorrichtung erzeugt wird, indem eine Förderrichtung der Hydraulikpumpe (40) geändert wird.

5. Fahrzeug mit Vierradantrieb nach Anspruch 3, wobei eine Abtriebswelle (7a) der Kraftmaschine (7) als Pumpenantriebswelle der Hydraulikpumpe (40) dient.

6. Fahrzeug mit Vierradantrieb nach Anspruch 3, wobei die zur Übertragung einer Geschwindigkeitsveränderung bestimmte Vorrichtung das außerhalb des Gehäuses (8a) der ersten Getriebe-Einheit (8) vorgesehene hydrostatische Getriebe und eine zur Übertragung einer Geschwindigkeitsveränderung bestimmte abgestufte zweite Mehrlaufvorrichtung umfasst, welche innerhalb des Gehäuses (8a) nach dem hydrostatischem Getriebe vorgesehen ist, und wobei eine Motorwelle (45a) des Hydraulikmotors (45) zum Antreiben der ersten Achse (9) als Eingangswelle der zur Übertragung einer Geschwindigkeitsveränderung bestimmten zweiten Vorrichtung dient.

7. Fahrzeug mit Vierradantrieb nach Anspruch 3, wobei der Hydraulikmotor (45) eine veränderliche Leistung aufweist und in dem Gehäuse (8a) der die erste Achse (9) tragenden Getriebe-Einheit (8) untergebracht ist.

8. Fahrzeug mit Vierradantrieb nach Anspruch 1, wobei ein Paar linker und rechter Achsen als zweite Achse (14) dient und wobei eine Differentialvorrichtung (70) auf antreibende Weise zwischen dem Hydraulikmotor (41) und dem Paar linker und rechter zweiter Achsen angeordnet ist.

9. Fahrzeug mit Vierradantrieb nach Anspruch 1, wobei ein Paar linker und rechter Achsen als zweite Achse (14) dient und ein Paar Hydraulikmotoren als Hydraulikmotoren (41) zum Antreiben der linken beziehungsweise rechten zweiten Achsen dient.

10. Fahrzeug mit Vierradantrieb nach Anspruch 9, wobei Motorwellen der Hydraulikmotoren (41) über eine Differentialbegrenzungsvorrichtung (73) mechanisch miteinander verbunden sind.

11. Fahrzeug mit Vierradantrieb nach Anspruch 9, wobei die Hydraulikmotoren (41) mit der Hydraulikpumpe (40) der ersten Getriebe-Einheit (8) so nebeneinandergeschaltet sind, dass eine Differentialdrehung der zweiten Achsen ermöglicht wird und die Nebeneinanderschaltung der Hydraulikmotoren (41) in eine Hintereinanderschaltung umgewandelt werden kann.

12. Fahrzeug mit Vierradantrieb nach Anspruch 1, wobei eine Kupplung (71) zwischen dem Hydraulikmotor (41) und der zweiten Achse (14) der zweiten Getriebe-Einheit (13) so angeordnet ist, dass eine Kraftübertragung von der zweiten Achse (14) zu dem Hydraulikmotor (41) verhindert und eine Kraftübertragung von dem Hydraulikmotor (41) zu der zweiten Achse (14) ermöglicht wird.

13. Fahrzeug mit Vierradantrieb nach Anspruch 1, wobei es sich bei dem Fahrzeug mit Vierradantrieb um ein Nutzfahrzeug mit einem Ladedeck (6) handelt und wobei die erste Getriebe-Einheit (8) unter dem Ladedeck (6) angeordnet ist.

## Revendications

1. Véhicule à quatre roues motrices comprenant :
une première boîte-pont (8) entraînant un premier essieu (9) et une seconde boîte-pont (13) entraînant un second essieu (14) disposées derrière et devant un moteur principal (7), respectivement ;
un moteur hydraulique (41) pour entraîner le second essieu (14), prévu dans la seconde boîte-pont (13) ;
une pompe hydraulique (40) pour fournir de l'huile au moteur hydraulique (41) de la seconde boîte-pont (13), la pompe hydraulique (40) ayant une capacité variable, et
un mécanisme de transmission de changement de vitesse pour entraîner le premier essieu (9), prévu dans la première boîte-pont (8), capable de changer de direction de rotation et connecté à entraînement au moteur principal (7) ;
**caractérisé en ce que**
la pompe hydraulique (40) est disposée dans un carter de pompe (7b) relié au moteur principal (7) de manière à être entraînée par le moteur principal (7) ; et
le mécanisme de transmission de changement de vitesse comprend
un capteur de vitesse de rotation (23) détectant la vitesse de rotation du premier essieu (9) pour commander une vitesse de rotation du moteur principal (7).

2. Véhicule à quatre roues motrices selon la revendication 1, dans lequel le mécanisme de transmission de changement de vitesse de la première boîte-pont (8) comprend : un premier mécanisme de transmission de changement de vitesse prévu en dehors du carter (8a) de la première boîte-pont (8) ; et un second mécanisme de transmission de changement de vitesse prévu au sein du carter (8a), dans lequel le premier mécanisme de transmission de changement de vitesse est disposé à entraînement en amont du second mécanisme de transmission de changement de vitesse.

3. Véhicule à quatre roues motrices selon la revendication 1, dans lequel le mécanisme de transmission de changement de vitesse de la première boîte-pont (8) comprend une transmission hydrostatique construite en connectant par voie fluidique un autre moteur hydraulique (45) pour entraîner le premier essieu (9) à la pompe hydraulique (40) pour fournir de l'huile pressurisée au moteur hydraulique (41) de la seconde boîte-pont (13).

4. Véhicule à quatre roues motrices selon la revendication 3, dans lequel une fonction du changement de direction de rotation du mécanisme de transmission de changement de vitesse est produite en changeant une direction de refoulement de la pompe hydraulique (40).

5. Véhicule à quatre roues motrices selon la revendication 3, dans lequel un arbre de sortie (7a) du moteur principal (7) sert d'arbre de pompe de la pompe hydraulique (40).

6. Véhicule à quatre roues motrices selon la revendication 3, dans lequel le mécanisme de transmission de changement de vitesse comprend : la transmission hydrostatique prévue en dehors du carter (8a) de la première boîte-pont (8) ; et un second mécanisme de transmission de changement de vitesse à étages à plusieurs vitesses prévu au sein du carter (8a) en aval de la transmission hydrostatique, et dans lequel un arbre de moteur (45a) du moteur hydraulique (45) pour entraîner le premier essieu (9) sert d'arbre d'entrée du second mécanisme de transmission de changement de vitesse.

7. Véhicule à quatre roues motrices selon la revendication 3, dans lequel le moteur hydraulique (45) est de capacité variable et logé dans le carter (8a) de la première boîte-pont (8) supportant le premier essieu (9).

8. Véhicule à quatre roues motrices selon la revendication 1, dans lequel une paire d'essieux gauche et droit sert de second essieu (14), et dans lequel un mécanisme différentiel (70) est interposé à entraînement entre le moteur hydraulique (41) et la paire de seconds essieux gauche et droit.

9. Véhicule à quatre roues motrices selon la revendication 1, dans lequel une paire d'essieux gauche et droit sert de second essieu (14) et une paire de moteurs hydrauliques sert de moteurs hydrauliques (41) pour entraîner les seconds essieux gauche et droit respectifs.

10. Véhicule à quatre roues motrices selon la revendication 9, dans lequel des arbres de moteur des moteurs hydrauliques (41) sont connectés mécaniquement les uns aux autres par un mécanisme de limite différentielle (73).

11. Véhicule à quatre roues motrices selon la revendication 9, dans lequel les moteurs hydrauliques (41) sont connectés en parallèle à la pompe hydraulique (40) de la première boîte-pont (8) de manière à permettre une rotation différentielle des seconds essieux et la connexion parallèle des moteurs hydrauliques (41) peut être transformée en connexion série.

12. Véhicule à quatre roues motrices selon la revendication 1, dans lequel un embrayage (71) est interposé entre le moteur hydraulique (41) et le second essieu (14) de la seconde boîte-pont (13) de manière à empêcher la transmission de puissance depuis le second essieu (14) vers le moteur hydraulique (41) et permettre la transmission de puissance depuis le moteur hydraulique (41) vers le second essieu (14).

13. Véhicule à quatre roues motrices selon la revendication 1, dans lequel le véhicule à quatre roues motrices est un véhicule utilitaire ayant un plancher de chargement (6), et dans lequel la première boîte-pont (8) est disposée en dessous du plancher de chargement (6).
